# EUROPEAN PATENT SPECIFICATION

(11) **EP 2 243 686 B1**
(45) Date of publication and mention of the grant of the patent: **05.03.2014**
(21) Application number: 10160777.8
(22) Date of filing: 22.04.2010
(51) Int. Cl.: B62D 6/00, B62D 5/04, G01C 25/00, G01D 18/00

(54) **Electric power steering device**
Elektrische Servolenkung
Direction assistée électrique

(30) Priority: 23.04.2009 JP 2009105469; 23.04.2009 JP 2009105460; 01.05.2009 JP 2009112329; 01.05.2009 JP 2009112327; 08.05.2009 JP 2009113352
(43) Date of publication of application: 27.10.2010
(73) Proprietor: Honda Motor Co., Ltd., Tokyo 107-8556 (JP)
(72) Inventor: Ehara, Shigeki, Saitama 351-0193 (JP); Kobayashi, Hiroaki, Saitama 351-0193 (JP); Tokunaga, Hiroyuki, Saitama 351-0193 (JP); Iijima, Takeshi, Saitama 351-0193 (JP); Banno, Yoshifumi, Saitama 351-0193 (JP)
(74) Representative: Herzog, Markus

(56) References cited:
- EP-A2- 0 563 885
- DE-A1-102006 018 974
- JP-A- 11 051 668
- JP-A- 2001 130 431
- JP-A- 2006 153 508
- US-A1- 2001 025 210

## Description

### BACKGROUND OF THE INVENTION

The present invention relates to a method for correcting a reference point of a sensor provided to a vehicle and an electric power steering device using the method.

A vehicle has been known which includes an electric power steering (EPS : Electric Power Steering) device for reducing a steering force of a driver. Such a vehicle includes an EPS ECU (Electronic Control Unit) for controlling the electric power steering device. In a vehicle including a VSA (Vehicle Stability Assist) which uses functions of ABS (Anti Lock Brake System) and TCS (Traction Control System) for controlling the behavior of the vehicle by controlling a braking system for wheels of the vehicle, a VSA_ECU for controlling the behavior of the vehicle is provided.

An EPS_ECU controls an electric power steering device based on a vehicle behavior such as a vehicle travel status (e.g. turning or advancing) and a vehicle speed to generate steering assistance force so that the steering force of a driver is reduced. The EPS_ECU also controls the electric power steering device to perform a reaction force control (a control for generating a reaction force against the operation of the steering wheel) based on an operation angle of a steering wheel (i.e. the steering angles of front wheels, which are steered wheels).

Some of the vehicles including an electric power steering device is provided with a vehicle behavior detection system which has a sensor for detecting a vehicle behavior. Specifically, the vehicle behavior detection system is provided with a yaw rate sensor, a steering angle sensor, a lateral acceleration sensor and a front and rear acceleration sensor, etc. as a vehicle behavior detection sensor for detecting turning of the vehicle.

As the steering angle sensor, a sensor detecting a relative angle change amount of the steering wheel may be used (e.g. rotary encoder). In this case, the EPS_ECU can calculate the operation angle of the steering wheel (i.e. the steering angle of the steered wheels) by using the angle change amount from a reference point, which is the neutral position of the steering wheel (i.e. a steering angle middle point).

Thus, the EPS_ECU needs to learn the steering angle middle point (i.e. needs to correct the reference point of the steering angle). A yaw rate detected by a yaw rate sensor is used to correct the reference point of the steering angle.

Therefore, a yaw rate sensor is required to accurately detect a yaw rate in order to enhance the accuracy of correcting the reference point of the steering angle.

"Learning the steering angle middle point" described here corresponds to "correcting a reference point of a sensor" described in Claims.

There has been known a yaw rate sensor such as those disclosed in Patent document 1 which includes a semiconductor element. Such a yaw rate sensor has a characteristic that the detected value is largely varied depending on a temperature (sensor temperature). As an ambient air temperature is changed by traveling of the vehicle, the temperature of the yaw rate sensor is also continuously changed. Therefore, in order to accurately detect the yaw rate of the driving vehicle, it is preferable that the neutral position of the yaw rate sensor in a state where the yaw rate is 0 (not in a turning state) is learned appropriately (i.e. the reference point is corrected as appropriate). "Correcting the reference point of the yaw rate sensor in the state where the yaw rate is 0" described here corresponds to "correcting a reference point of a sensor" described in Claims.

For example, Patent Document 2 discloses a steering angle neutral position learning system in which a provisional neutral position of the steering wheel is set when the ignition switch is turned ON, and the provisional neutral position is corrected in response to the subsequent driving status of the vehicle as appropriate to learn the accurate neutral position (steering angle middle point).

Vehicle behavior sensors are affected by various internal and external disturbances (see Patent Document 3). For example, an environment of the various vehicle behavior sensors or the running status of the vehicle is continuously changed, and the vehicle behavior sensors are subjected to aged deterioration. Therefore, even if vehicle behaviors are the same, different values may be detected from a vehicle behavior sensor. To cope with this problem, a relative value is used for a detected value of the vehicle behavior sensor. Thus, neutral position learning is performed to learn a reference point of each sensor for using signals from each vehicle behavior sensor for various control processes. For example, in detected values such as a "yaw rate", "acceleration" and "steering angle", which need a reference point for determining a relative value, the neutral position learning of "yaw rate", "acceleration" and "steering angle", etc. is performed taking a vehicle speed or a detected time, etc. into consideration as well as the output value of each vehicle behavior sensor.

"The neutral position learning of vehicle behavior sensors" described herein corresponds to "correcting a reference point of a sensor" recited in Claims.

Such neutral position learning has been performed easily and accurately when a vehicle is stopped, however, recently the neutral position learning has also been performed during running of a vehicle to realize more precise and accurate control and to cope with the increase of vehicle behavior control items. Systems and devices which perform vehicle behavior control includes an electric power steering device, an navigation system, a four wheel drive steering system, and vehicle body attitude control device.

Further, Patent Document 4 discloses a technique for correcting a reaction force applied to a steering wheel based on a signal from a yaw rate sensor.

### Prior Art Documents

### Patent Documents

Patent document 1: Japanese Unexamined Patent Application Publication No. 2000 - 81335
Patent document 2: Japanese Patent No. 3728991
Patent document 3: Japanese Unexamined Patent Application Publication No. 04 - 213067
Patent document 4: Japanese Unexamined Patent Application Publication No. 2008 - 221869

In the technique disclosed in Patent Document 2, it is determined whether or not a vehicle is running straight based on the detected value from the yaw rate sensor. However, Patent Document 2 does not disclose learning of the neutral position of the yaw rate sensor, and thus the technique disclosed in Patent Document 2 has a problem that steering angle middle point can not be accurately learned if the detected value of the yaw rate sensor is fluctuated depending on the variation of the sensor temperature (i.e. if the neutral position of the yaw rate sensor is not correct).

In order to solve this problem a configuration is preferable in which the neutral position of the yaw rate sensor is corrected as appropriate.

A yaw rate sensor corrects a neutral position by determining as a neutral position a value detected when a yaw rate is not generated in a vehicle. Thus, it is possible to determine as a reference value a detected value when a vehicle is stopped, for example.

As the yaw rate sensor is not stable immediately after a running vehicle is stopped due to the resonance of vibration caused by driving. Thus, the value detected when the yaw rate sensor becomes stable after a predetermined time has passed since the vehicle was stopped is determined to be a reference value, whereby the neutral position of the yaw rate sensor can be accurately corrected.

In such a configuration, it is preferable that the vehicle has been parked for several seconds since the running vehicle was stopped in order to stabilize the yaw rate sensor. Thus, several seconds needs to be passed after the running vehicle was stopped to correct the neutral position of the yaw rate sensor.

As the yaw rate sensor is stable when the vehicle is started (when the ignition switch is turned ON), the neutral position of the yaw rate sensor can be accurately corrected immediately after the start of the vehicle.

However, if it is configured that the neutral position of the yaw rate sensor is corrected when several seconds have passed after the vehicle was started, the driver may start to drive the vehicle before an EPS_ECU corrects the neutral position of the yaw rate sensor. In this case, the vehicle runs without correcting the neutral position of the yaw rate sensor.

If the temperature of the yaw rate sensor when the vehicle is running and the temperature of the yaw rate sensor when the vehicle is stopped are different, a yaw rate sensor which learns its neutral position by determining a value detected when the vehicle is stopped as an neutral position value may not be able to accurately detect the yaw rate generated in the running vehicle because the neutral position value is fluctuated depending on the variation of the temperature of the yaw rate sensor.

As described above, if the vehicle status does not continue in which the neutral position of the yaw rate sensor is corrected accurately, the learning accuracy of the EPS_ECU for learning the steering angle middle point of the steering angle sensor is deteriorated, and thus the EPS_ECU cannot accurately perform the reaction force control. As a result, the driver may feel uncomfortable.

Hereinafter, vehicle behavior sensors such as the steering angle sensor and the yaw rate sensor may just be referred to as "a sensor".

The neutral position learning during running is performed under a basal condition that the vehicle runs straight under a constant speed.

Even under this basal condition, small behavior change is always occurred in the vehicle due to the change of wind or a road condition. Thus, in the neutral position learning of the vehicle behavior sensor during running, an allowable range of fluctuation of the detected value of the vehicle behavior sensor is set.

However, due to this allowable condition, the vehicle running state which should not be determined as a neutral position detection state may be determined as the neutral position detection state because of the combined influence of wind, a road condition and the driving technique of the driver.

In the neutral position learning of the yaw rate sensor, this allowable condition (corresponding to a learning condition described later) is, for example, an allowable condition (learning condition) that the variation of the steering torque and the steering angle during running is within a specified range; a low to intermediate speed range is excluded as vehicle speed restriction; and the yaw rate fluctuation in a specified correction determining time period is small enough. When the vehicle gently curves on a cant road, the steering force may be hardly generated even though the vehicle is actually turning (there is a turning radius). In this case, the vehicle status may meet the allowable condition, and the yaw rate detected at this time may be determined as an appropriate neutral position and is falsely learned. As a result, a control difference may be generated between a right yaw rate and left yaw rate which are the same value in the vehicle behavior control device using the yaw rate sensor.

JP 2006 153508 A discloses a configuration in which the neutral point correction is performed by comparing the previous sensor neutral point corrected value and a current neutral point correction candidate value, and a configuration in which the neutral point is corrected based on the sensor temperature.

US 2001/02521011 discloses a configuration in which the neutral point correction is performed by comparing the previous sensor neutral point corrected value and a current neutral point correction candidate value, and a configuration in which the neutral point is corrected when the vehicle is parked.

JP 11 051668 A discloses a configuration in which the neutral point correction is performed by comparing the previous sensor neutral point corrected value and a current neutral point correction candidate value.

JP 2001 130431 A discloses a configuration in which the neutral point is corrected when the vehicle is stopped.

EP 0 563 885 A2 discloses a configuration in which the neutral point is corrected based on the vehicle speed.

DE 10 2006 018 974 A1 discloses a configuration in which the neutral point is corrected when the vehicle is stopped.

The present invention is made in view of the above problem, and an object thereof is to provide a sensor reference point correction method which can perform a sensor reference point correction as appropriate without being affected by the variation of the sensor temperature and a vehicle running status and an electric power steering device using the method.

In order to solve the above problem, a sensor reference point correction method of Claim 1 is provided.

According to the sensor reference point correction method of claim 1, the yaw rate neutral position is corrected before the temperature of the engine room is increased by the heat of the engine, such that if the vehicle which was stopped at the stop time (t0) has been parked for a first predetermined time until a first point in time (t1), after the stop time (t0), the electric power steering control unit determines as the yaw rate neutral position a value detected by the yaw rate sensor at the second point in time (t2), after the stop time (t0) when a second predetermined time which is shorter than the first predetermined time is passed since the vehicle was stopped, and corrects the yaw rate neutral position at the first point in time (t1); and if the temperature of the engine room is increased, the yaw rate neutral position is not corrected.

The sensor reference point correction method includes the step of correcting the reference point of the sensor provided to the vehicle when the status of the vehicle meets the predetermined condition, wherein the condition is relaxed at the engine start time of the vehicle to correct the neutral position of the yaw rate sensor. Thus, at the engine start time of the vehicle for example, it is made to be easier to correct the sensor reference point.

The sensor reference point correction method includes a step of correcting the reference point of the sensor at the time when a second predetermined time has passed with the vehicle being stopped since the vehicle was stopped, wherein the reference point of the sensor is not corrected after the second predetermined time has passed with the vehicle being stopped.

Thus, the reference point of the sensor can be corrected at the time when a second predetermined time has passed with the vehicle being stopped since the vehicle was stopped, the reference point of the sensor is configured not to be corrected after the second predetermined time has passed with the vehicle being stopped.

Thus, it is possible to prevent the reference point from being corrected in an environment where the temperature is high after the second predetermined time has passed with the vehicle being parked even if the sensor is arranged in the environment where the temperature is increased as time passes from the time when the running vehicle was stopped.

In accordance with the present invention, it is possible to provide a sensor reference point correction method which can perform a sensor reference point correction as appropriate without being affected by the variation of the sensor temperature and a vehicle running status and an electric power steering device using the method.

### BRIEF DESCRIPTION OF THE DRAWINGS

Fig. 1 is an electric power steering device of a vehicle to which a method for correcting a reference point of a sensor according to a first example is applied.
Fig. 2 is an illustration for explaining a time relationship of a parking time of a vehicle and the yaw rate neutral position correction according to the first example.
Fig. 3 is a flow chart showing the control process of the yaw rate neutral position correction and the steering angle middle point correction.
Fig. 4 is a graph showing the relationship of the parking time of a vehicle according to the embodiment of the present invention and a temperature increase of the engine room.
Fig. 5 is a flow chart showing a process performed by the EPS_ECU of the embodiment to correct the yaw rate neutral position.
Fig. 6 is a block diagram showing a sensor reference point correction method according to a second example of the present invention and a reference point correcting device to which the method of the second example is applied.
Fig. 7 is a flow chart showing the control process for correcting a reference point of a sensor according to the second example.
Fig. 8 is a block diagram showing a core part of the vehicle including the VSA_ECU according to a third example.
Fig. 9 is a functional block diagram of the VSA_ECU according to the third example·
Fig. 10 is a flow chart showing the control process according to the third example for learning the yaw rate neutral position.
Fig. 11 is a functional block diagram of the VSA_ECU according to the fourth example.
Fig. 12 is a functional block diagram of the EPS_ECU according to a fourth example of the present invention.
Fig. 13 is a graph for explaining a yaw rate reaction force correction restriction factor in the fourth example.

### DESCRIPTION OF THE PREFERRED EMBODIMENTS

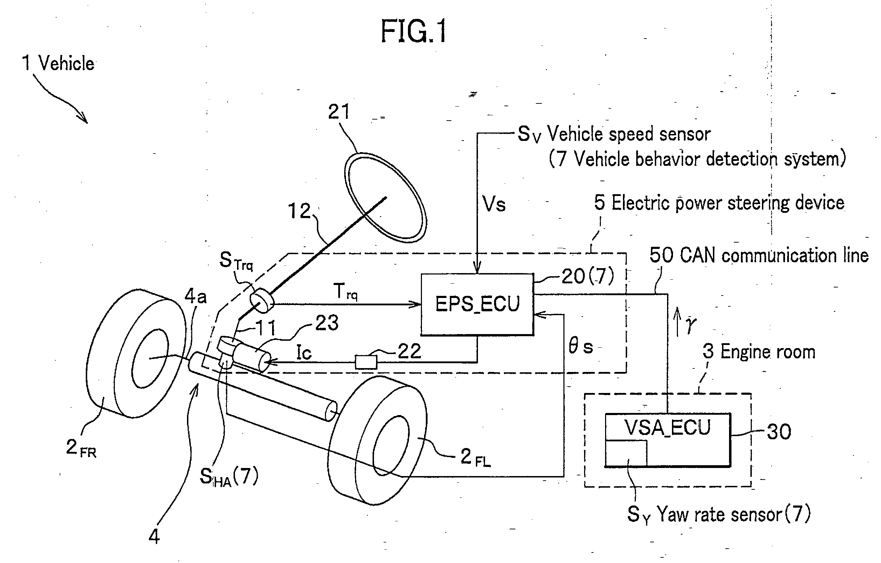

A method for correcting a reference point of a sensor according to the first example of the present invention is described with reference to Figs. 1 to 3. Fig. 1 is an electric power steering device of a vehicle to which the method for correcting a reference point of a sensor according to the first example is applied.

As shown in Fig. 1, the steering mechanism of a vehicle 1 is configured such that a steering wheel 21 is attached via a steering shaft 12 to a pinion shaft 11 integrally revolving with a pinion gear (not shown) which is meshed with a rack of a rack shaft 4a of a rack and pinion mechanism 4.

When a driver operates the steering wheel 21, the pinion gear (not shown) is integrally revolved with the pinion shaft 11, moving the rack shaft 4a right or left, whereby the right and left wheels 2_{FL}, 2_{FR}, which are steered wheels connected to the rack shaft 4a, are steered.

The vehicle 1 includes an electric power steering device 5. The electric power steering device 5 includes a motor 23 which generates as a motorized force a steering assistance force (steering assistance torque) for reducing the steering force required when the driver steers the steering wheel 21 and applies the steering assistance force to a steering mechanism.

A warm (not shown) connected to the output shaft of the motor 23 is meshed with a warm wheel gear (not shown) which is fixed to the pinion shaft 11, and generates a steering assistance torque for rotating the pinion shaft 11 by the revolution of the output shaft of the motor 3 when the driver operates the steering wheel 21. Thus, the steering force of the driver is reduced.

The electric power steering device 5 includes an EPS_ECU 20 which controls the electric power steering device 5 by driving and controlling the motor 23.

The EPS_ECU 20 is comprised of a micro computer including a CPU(Central Processing Unit), a ROM (Read Only Memory), a RAM (Random Access Memory), etc. and a peripheral circuit. The EPS_ECU 20 drives and controls programs stored in the ROM by the CPU and drives and controls the motor 23 via the motor driving circuit 22.

The VSA_ECU 30 for controlling the behavior (vehicle behavior) of the vehicle I is comprised of a micro computer including a CPU, a ROM, a RAM (not shown) and a peripheral circuit, etc. The CPU executes programs stored in the ROM, for example, to control the behavior of the vehicle 1 via a braking system (not shown) which is provided to each wheel. The VSA_ECU 30 is provided, for example, in an engine room 3.

The EPS_ECU20 and the VSA_ECU 30 are connected to each other with a communication line 50 (hereinafter also referred to as "CAN communication line 50") of a CAN (Controller Area Network) network (hereinafter also referred to as "a CAN network") and are configured such that the EPS_ECU20 and the VSA_ECU 30 can transmit data with each other.

A torque sensor S_{Trq} is attached to the pinion shaft 11, and detects and outputs a signal indicating a steering torque T_{rq} when the driver operates the steering wheel 21. The detected signal indicating the steering torque T_{rq} is input to the EPS_ECU 20, and thus the EPS_ECU20 obtains the steering torque

T_{rq} of the pinion shaft 11.

A yaw rate sensor S_{Y} which is a sensor for detecting the behavior of the vehicle is incorporated, for example, into the VSA_ECU 30 and detects a yaw rate γ of the vehicle 1 and outputs a signal indicating the yaw rate to the VSA_ECU 30.

The signal indicating the yaw rate γ is input from the VSA_ECU 30 to the EPS_ECU 20 via the CAN communication line 50, and thus the EPS_ECU 20 obtains the yaw rate γ of the vehicle 1.

A vehicle speed sensor Sv is connected to the EPS_ECU 20.

The vehicle speed sensor Sᵥ calculates the vehicle speed Vs based on the number of pulses per a unit time which is output from a wheel speed sensor (not shown) provided to each wheel and outputs a signal indicating the vehicle speed Vs. The signal indicating the vehicle speed Vs is input to the EPS_ECU 20, and thus the EPS_ECU 20 obtains the vehicle speed Vs of the vehicle 1.

The CPU of either one of the EPS_ECU 20 or the VSA_ECU 30 may receive a pulse signal from each wheel speed sensor to calculate the vehicle speed Vs based on the wheel speed and outputs the vehicle speed Vs to the other one of the EPS_ECU 20 or the VSA_ECU 30 via the CAN communication line 50.

Furthermore, the vehicle 1 includes a steering angle sensor S_{HA} for detecting the operation angle of the steering wheel 21.

The steering angle sensor S_{HA} is comprised of a sensor for detecting the angle change amount of the steering wheel 21 when the driver operates the steering wheel 21 and outputs a signal indicating an operation angle θs of the steering wheel 21. The signal indicating the operation angle θs is input to the EPS_ECU 20 and the EPS_ECU 20 calculates the steering angles δ of the steered wheels 2_{FL}, 2_{FR} based on the signal indicating the operation angle θs.

The EPS_ECU 20 sets a steering assistance torque which is output by the motor 23 based on the vehicle speed Vs, the steering torque T_{rq}, etc. and outputs a current control signal to the motor driving circuit 22 so that the EPS_ECU 20 outputs the set steering assistance torque. The motor driving circuit 22 then supplies a driving current Ic to the motor 23 in accordance with the current control signal. The output shaft of the motor 23 is rotated by the supplied driving current Ic, whereby the steering assistance torque is applied to the pinion shaft 11. Thus, the steering force of the driver can be reduced.

The EPS_ECU 20 executes a reaction force control in which steering reaction force is applied to the steering wheel 21 based on the vehicle speed Vs, the steering torque T_{rq}, the steering angle δ and the yaw rate γ, etc.

In the first example, the EPS_ECU 20 is configured to detect the behavior of the vehicle 1 based on detected values of the vehicle speed sensor Sv, the steering angle sensor S_{HA} and the yaw rate sensor S_{Y}. The vehicle behavior detection system 7 is comprised of the vehicle speed sensor Sᵥ, the steering angle sensor S_{HA}, the yaw rate sensor S_{Y} and the EPS_ECU 20.

In a case where the steering angle sensor S_{HA} is a sensor for detecting the angle change amount of the steering wheel 21, the EPS_ECU 20 learns that the steering wheel 21 is at a neutral position in which the vehicle runs straight (operation angle neutral position which is a reference point), and calculates the operation angle θs of the steering wheel 21 based on the steering angle change amount from the operation angle neutral position. In other words, the EPS_ECU 20 learns that the steering angle δ is also the steering angle middle point, which is a reference point when the operation angle θs is the neutral position, and calculates the steering angle steering angle δ based on the steering angle change amount from the steering angle middle point. Thus, the EPS-ECU20 needs to learn the steering angle middle point. The learning of the steering angle middle point by the EPS_ECU 20 is referred to as "the steering angle middle point learning" hereinafter.

It is preferable that the EPS_ECU 20 regularly learns the steering angle middle point in order to accurately detect the steering angle δ which corresponds to the operation angle θs of the steering wheel 21.

When the operation angle θs of the steering wheel 21 is at the neutral position (i.e. the steering angle δ is at the neutral position), the vehicle 1 runs straight. Therefore, the EPS_ECU 20 determines, as the steering angle neutral position, a steering angle δ which is calculated based on the operation angle signal θs input from the steering angle sensor S_{HA} when the yaw rate is not generated in the driving vehicle 1 in the steering angle middle point learning.

For example, the EPS_ECU 20 learns that the operation angle θs of the steering wheel 21 is at the neutral position (i.e. the steering angle middle point) when the following conditions A are met.

### <Conditions A>

1. The vehicle speed Vs of the vehicle 1 is equal to or more than a predetermined value VEL 1.
2. The yaw rate γ of the vehicle 1 is equal to or less than a predetermined threshold value YAW1.
3. The steering torque T_{rq} of the pinion shaft 11 is within a predetermined absolute value TRQ1.
4. The absolute value of the variation of the steering angleδ is equal to or less than ΔDEG1.
5. The status described in 1 to 4 continues over a time TIM1.

As described above, the EPS_ECU 20 of the vehicle 1 includes a function for learning the steering angle middle point based on the detected value of the steering angle sensor S_{HA} when the yaw rate γ detected by the yaw rate sensor S_{Y} is equal to or less than a predetermined value YAW1.

As the yaw rate γ detected by the yaw rate sensor S_{Y} is used for the learning of the steering angle middle point by the EPS_ECU 20, it is preferable that a reference point of the yaw rate sensor S_{Y} is corrected as necessary in order to enhance the accuracy of detection of the yaw rate by the yaw rate sensor S_{Y}. With this configuration, it is possible to enhance the learning accuracy of the steering angle middle point by the EPS_ECU 20.

Hereinafter, the neutral position of the yaw rate sensor S_{Y} which is the reference point of the yaw rate sensor S_{Y} may be referred to as a yaw rate neutral position. The yaw rate neutral position corresponds to a value detected by the yaw rate sensor S_{Y} when a yaw rate is not generated in the vehicle 1.

Correcting the yaw rate neutral position may also be referred to as "neutral position correction (reference point correction) hereinafter.

For example, the EPS_ECU 20 corrects the yaw rate neutral position by determining as the yaw rate neutral position a value detected by the yaw rate sensor S_{Y} when the following condition B is met.

### <Conditions B>

If a predetermined time ΔTyaw which is shorter than a predetermined time ΔTst has passed since the vehicle 1 was stopped in a case where the vehicle 1 is stopped for a predetermined time ΔTst.

In a case where the vehicle is running, the EPS_ECU 20 corrects the yaw rate neutral position by determining as the yaw rate neutral position a value detected by the yaw rate sensor S_{Y} when the following conditions C are met.

### <Conditions C>

1. The variation range of the yaw rate γ is within a predetermined absolute value ΔYAW2.
2. The absolute value of the steering torque T_{rq} of the pinion shaft 11 is within a predetermined value TRQ2.
3. The absolute value of the variation range of the steering angle δ is within a predetermined value ΔDEG2.
4. The vehicle speed Vs is equal to or more than a predetermined value VEL2.
5. The status described in 1 to 4 continues over a time TIM1.

The condition 4 that the vehicle speed Vs is equal to or more than the predetermined value VEL2 excludes, for example, a middle to low speed range and includes the vehicle speed Vs of 80km/h or faster. As the fluctuation range of the yaw rate γ becomes too large in the middle to low speed range of 50km/h and 30km/h which is slower than 80km/h, the condition 4 is set so that the fluctuation rage of the yaw rate γ may be within a fluctuation range which can be regarded as small (i.e. within the absolute value ΔYAW2) in a correction determining time period (e.g. a five second) required to determine the correction of a reference value of a predetermined yaw rate γ.

Predetermined values (VEL1, YAW1, TRQ1, ΔDEG1, TIM1, ΔYAW2, TRQ2, ΔDEG2, VEL2 TIM2) of the conditions A and C may be set appropriately depending on the performance requited for the vehicle 1 and the sensitivity of the steering angle sensor S_{HA} and the yaw rate sensor S_{Y}.

A detailed method of setting a predetermined time ΔTst, ΔTyaw are described later.

The EPS_ECU 20 corrects the neutral position of the yaw rate when either one set of the condition B and the conditions C is met, and when the set of conditions A is met the EPS_ECU 20 learns the steering angle middle point based on the detected value of the yaw rate sensor S_{Y} on which neutral position correction has been performed. By appropriately leaning the steering angle middle point as described above, the EPS_ECU 20 can accurately calculate the steering angle δ based on the operation angle θs of the steering wheel 21. The EPS_ECU 20 can preferably perform the reaction force control based on the accurate steering angle δ which corresponds to the operation angle θs of the steering wheel 21.

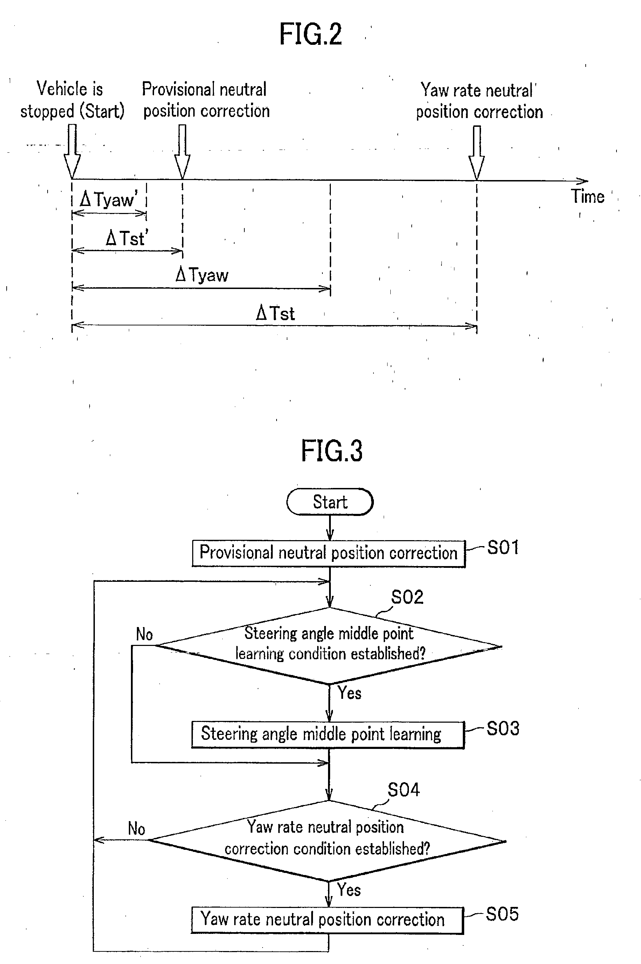

Next, the yaw rate neutral position correction is described with reference to Fig. 2. Fig. 2 is an illustration for explaining a time relationship of a parking time of a vehicle and the yaw rate neutral position correction according to the first example.

In a case where the EPS_ECU 20 performs the yaw rate neutral position correction when the running vehicle 1 is stopped, the vehicle 1 needs to be stopped for a predetermined time ΔTst as shown in Fig. 2.

After a predetermined time ΔTst has passed since the vehicle was stopped, the EPS_ECU 20 determines as the yaw rate neutral position a value detected by the yaw rate sensor S_{Y} when a predetermined time ΔTyaw, which is shorter than the predetermined time ΔTst, has passed since the vehicle 1 was stopped. ,

When the running vehicle 1 is parked for the predetermined time ΔTst since the vehicle 1 was stopped, the yaw rate sensor S_{Y} can be stabilized as described above. Thus_{,} the EPS_ECU 20 can accurately correct the yaw rate neutral position by determining as the yaw rate neutral position a value of the yaw rate sensor S_{Y} detected when the yaw rate sensor S_{Y} is stabilized.

Therefore, a time by which the yaw rate sensor S_{Y} is stabilized may be set as the predetermined time ΔTst in advance based on an experiment.

The predetermined time ΔTyaw is not limited to a specified unique time and may be set appropriately according to the characteristic of the yaw rate sensor S_{Y}. For example, the predetermined time ΔTyaw may be set to be half a time of the predetermined time ΔTst (ΔTyaw = (ΔTst)/2).

The predetermined time ΔTyaw may also be set to be equal to the predetermined time ΔTst.

As described above, the predetermined time ΔTst which is the parking time of the vehicle required for the EPS_ECU 20 to perform the yaw rate neutral position correction is a time needed for the yaw rate sensor S_{Y} to be stabilized, and may set to be several tens of seconds. Thus, if it is configured that the yaw rate neutral position is corrected when the predetermined time ΔTst shown in Fig. 2 is passed after the engine of the vehicle 1 is started upon turning on an ignition switch (not shown), the driver may start and drive the vehicle 1 before the predetermined time ΔTst is passed.

If the vehicle 1 starts to run before the predetermined time ΔTst is passed after the start of the engine, the vehicle 1 runs without the yaw rate neutral position being corrected by the EPS_ECU 20.

After that, the EPS_ECU 20 can not correct the yaw rate neutral position until the status of the vehicle 1 meets either one set of the conditions B and C, and thus can not learn the steering angle middle point

Thus, the EPS_ECU 20 cannot accurately correct and calculate the steering angle δ corresponding to the operation angle θs of the steering wheel 21 and cannot preferably perform the reaction force control on the steering wheel 21. This may cause the driver to feel uncomfortable when operating the steering wheel 21.

To solve the above problem in the first example, when the EPS_ECU 20 is in an unlearned state where the EPS_ECU 20 has not learned the steering angle middle point, such as immediately after the engine of the vehicle 1 is started, conditions for performing the yaw rate neutral position cotrection are moderated.

More specifically, as for the yaw rate neutral position correction performed for the first time after the start of the engine, the predetermined time ΔTst of Fig. 2, which is the parking time of the vehicle 1, is substantially shortened to be ΔTst'.

With this configuration, the EPS_ECU 20 can correct the yaw rate neutral position in a shorter parking time. Further, the EPS_ECU 20 can learn the steering angle middle point based on the detected value of the yaw rate sensor on which the yaw rate neutral position correction is performed.

For example, when the vehicle 1 whose engine is just started is parked for the parking time ΔTst' which is shorter than the parking time ΔTst, the EPS_ECU 20 provisionally performs the neutral position correction on the yaw rate sensor S_{Y} by determining as the yaw rate neutral position (provisional neutral position) of the yaw rate sensor S_{Y} a value detected by the yaw rate sensor S_{Y} when the predetermined time ΔTyaw' which is shorter than the parking time ΔTst' is passed. The provisional correction of the neutral position of the yaw rate sensor S_{Y} may be referred to as a provisional neutral position correction.

In short, the EPS_ECU 20 performs the provisional neutral position correction on the yaw rate sensor S_{Y} after the engine of the vehicle 1 is started.

For example, if the vehicle 1 can start to run in an approximately 10 seconds from the time when the driver turns on the ignition switch (not shown) and starts the engine of the vehicle 1, the parking time Δ**T**st' which is shorter than 10 seconds (for example, 5 seconds) is set in advance, and the predetermined time ΔTyaw' is set to be shorter than the parking time ΔTst'. In short, the EPS_ECU 20 moderates the conditions for learning the yaw rate neutral position to perform the provisional neutral position correction.

With this configuration, the EPS_ECU 20 can always perform the provisional neutral position correction on the yaw rate sensor S_{Y} after the start of the engine of the vehicle 1.

When the conditions A are met, the EPS_ECU20 can then learn the steering angle middle point based on a detected value of the yaw rate sensor S_{Y} on which the provisional neutral position correction has been performed.

With reference to Figs. 1 to 3, a process performed by the EPS_ECU20 for correcting the yaw rate neutral position and learning the steering angle middle point is described. Fig. 3 is a flow chart showing the control process of the yaw rate neutral position correction and the steering angle middle point correction.

Although omitted in the flow chart shown in Fig. 3, a detected signal from the yaw rate sensor S_{Y} provided to the VSA_ECU 30 is input to the EPS_ECU20 via the VSA_ECU 30 and the CAN communication line 50 in a predetermined period. When an elapsed time measured by the EPS_ECU 20 from the start of the engine of the vehicle 1 reaches the predetermined time ΔTyaw', the EPS_ECU 20 temporarily stores the signal detected by the yaw rate sensor S_{Y} at this time. When the elapsed time measured from the time when the vehicle 1 was stopped reaches the predetermined time ΔTyaw, the EPS_ECU 20 temporarily stores the signal detected by the yaw rate sensor S_{Y} at this time.

If the engine of the vehicle 1 is started, the EPS_ECU20 performs the provisional neutral position correction on the yaw rate sensor S_{Y} in step S01 as shown in Fig. 3. More specifically, the EPS_ECU20 performs the provisional neutral position correction on the yaw rate sensor S_{Y} by using the signal detected by the yaw rate sensor S_{Y} when the predetermined time ATyaw' is reached.

In step S02, the EPS_ECU20 checks whether or not the conditions for learning the steering angle middle point are met after the provisional neutral position correction is performed on the yaw rate sensor S_{Y}. The processing of the EPS_ECU20 proceeds to step S03 if the conditions for learning the steering angle middle point are met (Yes) after the provisional neutral position correction is performed on the yaw rate sensor S_{Y}. If the conditions for learning the steering angle middle point are not met (No), the processing of the EPS_ECU20 proceeds to step S04. In step S03, the EPS_ECU20 learns the steering angle middle point based on a detected value of the yaw rate sensor S_{Y} on which the provisional neutral position correction is performed.

In step S02, the EPS_ECU20 determines that the condition for learning the steering angle middle point is met if the conditions A are met. In contrast, the EPS_ECU20 determines that the condition for learning the steering angle middle point is not met if the conditions A are not met.

Subsequently, the EPS_ECU20 checks whether or not the yaw rate neutral position correction conditions are met in step S04. If the yaw rate neutral position correction condition is met (Yes), the processing proceeds to step S05. If the yaw rate neutral position correction condition is not met (No), the processing returns to step S02 without correcting the yaw rate neutral position.

In step S05, the EPS_ECU 20 corrects the yaw rate neutral position.

When the either one set of the condition B and the conditions C is met, the EPS_ECU 20 determines that the yaw rate neutral position correction condition is met. In contrast, when neither one set of the conditions B nor C is met, the EPS_ECU 20 determines that the yaw rate neutral position correction condition is not met. More specifically, when the condition for correcting the yaw rate neutral position correction is met, the EPS_ECU 20 performs the neutral position correction on the yaw rate sensor S_{Y} by using a signal detected by the yaw rate sensor S_{Y} when the predetermined time ΔTyaw is passed from the time the vehicle was stopped.

The meaning of "when the yaw rate neutral position correction condition is met" corresponds to "when a status of the vehicle meets a predetermined condition" described in Claims.

The predetermined time ΔTst included in the condition B corresponds to "first predetermined time" described in Claims.

If the EPS_ECU 20 determines Yes in step S04 where the yaw rate neutral position correction condition is met during a period in which the processing returns to step S02 and the EPS_ECU 20 determines No in step S02 where the steering angle middle point learning conditions are not met, the processing proceeds to step S05 in which the EPS_ECU 20 can correct the yaw rate neutral position. Therefore, the EPS_ECU 20 can learn the steering angle middle point as appropriate in a timing at which the steering angle middle point learning condition is met based NOT on the detected value of the yaw rate sensor S_{Y} on which the provisional neutral position correction has been performed but on the detected value of the yaw rate sensor S_{Y} on which the yaw rate neutral position correction has been performed.

As described above, the EPS_ECU 20 (see Fig. 1) according to the first example can perform the provisional neutral position correction on the yaw rate sensor S_{Y} (see Fig. 1) without fail when the engine of the vehicle 1 (see Fig. 1) is started. Furthermore, the EPS_ECU20 can learn the steering angle middle point based on the detected value of the yaw rate sensor S_{Y} on which the provisional neutral position correction has been performed.

As described above, immediately after the driver starts the engine of the vehicle 1 (see Fig. 1), the EPS_ECU20 (see Fig. 1) according to the example shortens the parking time ΔTst required for the vehicle 1 to perform the yaw rate neutral position correction to be ΔTst' and performs the provisional neutral position correction as shown in Fig. 2. In other words, the EPS_ECU 20 moderates the yaw rate neutral position correction condition to perform the neutral position correction (provisional, neutral position correction).

With this configuration, even when the vehicle 1 starts to drive immediately after the driver starts the engine of the vehicle 1, the EPS_ECU 20 can learn the steering angle middle point based on a detected value of the yaw rate sensor S_{Y} on which the provisional neutral position correction has been performed. Thus, the EPS_ECU 20 can accurately learn the middle point of the steering angle δ corresponding to the operation angle θs of the steering wheel 21 (see Fig. 1), which allows the EPS_ECU 20 to obtain the steering angle δ which is corrected based on the learned steering angle middle point. Thus, the reaction force control of the steering wheel 21 can be preferably performed, which advantageously prevent the driver from feeling uncomfortable.

It has been explained that the EPS_ECU 20 (see Fig. 1) moderates the yaw rate neutral position correction condition immediately after the start of the engine of the vehicle 1 (see Fig. 1), however, the EPS_ECU 20 may be configured to moderate the yaw rate neutral position correction condition when the EPS_ECU 20 is in an unlearned state where the EPS_ECU 20 has not learned the steering angle middle point.

It has been also explained that the EPS_ECU 20 moderates the yaw rate neutral position correction condition by shortening the parking time ΔTst required for the vehicle 1, however, the yaw rate neutral position correction condition may be moderated by moderating the Conditions C (e.g. increasing the value of ΔYAW2 (the absolute value of the fluctuation range of the yaw rate γ) or TRQ2 (the absolute value of the steering torque Trq applied to the pinion shaft 11)).

Furthermore, in the first example, the operation angle θs of the steering wheel 21 is detected as the steering angle sensor S_{HA}, and the EPS_ECU 20 calculates the steering angles δ of the steered wheels 2_{FL}, 2_{FR} based on the operation angle θs, however, an example of the present invention is not limited to this. For example, the method of the first example of the present invention for correcting a reference point of a sensor can be applied to a vehicle which is configured such that the movement amount of the rack shaft 4a is detected to allow the EPS_ECU20 to calculate and obtain the steering angle δ.

Next, the embodiment of the present invention is described with reference to Figs. 1, 4 and 5.

An electric power steering device 5 of a vehicle to which a method of the embodiment of the present invention for correcting a reference point of a sensor is applied has the same configuration as that of the electric power steering device 5 shown in Fig. 1 which has been explained in the first example. Thus, the repeated explanation thereof will be omitted.

The first example and the embodiment are different in a method performed by the EPS_ECU 20 for correcting a reference point of the yaw rate sensor S_{Y} when the conditions B are met.

The vehicle 1 runs straight when the operation angle θs of the steering wheel 21 is at a neutral position (i.e. the steering angle δ is at a middle point). Thus, the method of the embodiment is the same as that of the first example in that (1) the EPS_ECU 20 determines as the steering angle middle point an operation angle θ s input from the steering angle sensor S_{HA} when the yaw rate γ is not generated in the running vehicle 1 and (2) the EPS_ECU 20 determines the operation angle θs of the steering wheel 21 to be a neutral position (i.e. the steering angle middle point) when the Conditions A are met and then learns the steering angle middle point.

The method of the embodiment is also the same as that of the first example in that (1) the EPS_ECU 20 corrects the yaw rate neutral position by determining as the yaw rate neutral position a value detected by the yaw rate sensor S_{Y} when the condition B is met and (2) the EPS_ECU 20 corrects the yaw rate neutral position by determining as the yaw rate neutral position a value detected by the yaw rate sensor S_{Y} when the conditions C are met in a case where the vehicle 1 is running.

However, if the yaw rate neutral position is corrected when the engine room 2 is at a high temperature, a value of the yaw rate neutral position detected by the yaw rate sensor S_{Y} when the temperature of the engine room becomes lower to the level of the ambient temperature due to, for example, driving of the vehicle may different from the value of the yaw rate neutral position detected by the yaw rate sensor S_{Y} when the yaw rate neutral position was corrected. In short, the value of the neutral position detected by the yaw rate sensor S_{Y} may be fluctuated in a driving state of the vehicle 1.

The yaw rate sensor S_{Y} in which the neutral position is fluctuated may output a value indicating that the yaw rate γ is not generated even when the driver operates the steering wheel 21 and the vehicle 1 is turning. Thus, there is a risk that the EPS_ECU 20 may determine that the vehicle 1 runs straight even if the vehicle 1 is turning, whereby the EPS_ECU20 may wrongly learn the steering angle middle point.

In short, the EPS_ECU 20 may wrongly determine that the steering angle is at the steering angle middle point even when the driver operates the steering wheel 21, whereby the EPS_ECU 20 wrongly learn the steering angle middle point.

As described above, if the value of the neutral position is fluctuated in the yaw rate sensor S_{Y} of the running vehicle 1, the accuracy of learning the steering angle middle point by the EPS_ECU 20 is deteriorated.

Thus, the method of the embodiment is configured such that when the running vehicle 1 is stopped, the yaw rate neutral position is corrected before the temperature of the engine room 3 is increased by the heat of the engine, and if the temperature of the engine room 3 is increased, the yaw rate neutral position is not corrected.

As the temperature of the engine room 3 immediately after the vehicle J is stopped can be regarded as substantially the same as that of the engine room 3 when the vehicle 1 is running, the EPS_ECU 20 can prevent the yaw rate sensor S_{Y} from being affected by the temperature increase of the engine room 3 by correcting the yaw rate neutral position immediately after the vehicle 1 is stopped. More specifically, the EPS_ECU 20 can correct the yaw rate neutral position at a sensor temperature close to that of the yaw rate sensor S_{Y} of the running vehicle 1, which allows to reduce the neutral position value fluctuation generated in the yaw rate sensor S_{Y} of the running vehicle 1.

The EPS_ECU 20 makes it possible to learn the steering angle middle point by using the value detected by the yaw rate sensor S_{Y} on which the yaw rate neutral position correction has been performed, whereby the learning accuracy of the steering angle middle point can be enhanced.

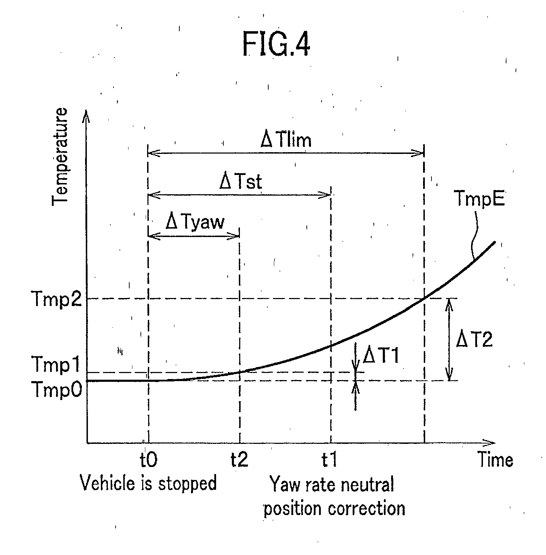

With reference to Figs. 1 and 4, a time course in which the EPS_ECU 20 corrects the yaw rate neutral position when the vehicle 1 is parked is explained in association with the temperature increase of the engine room 3 indicated by a symbol TmpE. Fig. 4 is a graph showing the relationship of the parking time of a vehicle according to the embodiment and a temperature increase of the engine room.

As shown in Fig. 4, if the vehicle 1 which was stopped at the time t0 has been parked for the predetermined time ΔTst until the time t1, the EPS_ECU 20 determines as the yaw rate neutral position a value detected by the yaw rate sensor S_{Y} at the time t2 when the predetermined time ΔTyaw shorter than the predetermined time ΔTst is passed since the vehicle 1 was stopped, and corrects the yaw rate neutral position at the time t1.

The yaw rate sensor S_{Y} is not stable due to the resonan of the vibration generated by driving immediately after the running vehicle 1 is stopped. Thus, the EPS_ECU 20 is configured to determine as the yaw rate neutral position a value detected by the yaw rate sensor S_{Y} if the vehicle 1 has parked for the predetermined time ΔTst and the yaw rate sensor S_{Y} is stabilized. With this configuration, the EPS_ECU 20 can accurately correct the yaw rate neutral position.

As shown in Fig. 4, the temperature TmpE of the engine room 3 before the time t0 when the vehicle 1 is running is maintained to be, for example, a temperature Tmp0 which is close to the ambient temperature. The temperature TmpE of the engine room 3 increases from the time t0 when the running vehicle 1 is stopped.

The temperatureTmp0 of the engine room 3 of the running vehicle 1 may be referred to as a "running vehicle temperature Tmp0".

As described above, as the value detected by the yaw rate sensor S_{Y} is fluctuated depending on the variation of the sensor temperature which is affected by the variation of the ambient air temperature, the value detected by the yaw rate sensor S_{Y} is changed when the temperature TmpE of the engine room 3 is changed.

At the temperature Tmp1 shown in Fig. 4, for example, the temperature difference ΔT1 from the running vehicle temperature Tmp0 is small. Therefore, if the yaw rate neutral position is corrected when the temperature TmpE of the engine room 3 is the temperature Tmp1, it is possible to make the neutral position fluctuation generated in the yaw rate sensor SY be smaller in the running vehicle 1.

On the other hand, at the temperature Tmp2, the temperature difference ΔT2 from the running vehicle temperature Tmp0 is large. Therefore, if the yaw rate neutral position is corrected when the temperature TmpE of the engine room 3 is the temperature Tmp2, the neutral position fluctuation generated in the yaw rate sensor S_{Y} becomes larger in the running vehicle 1.

Thus, the allowable range of the neutral position fluctuation generated in the yaw rate sensor S_{Y} (allowed value) during running of the vehicle 1 is set in advance when the yaw rate neutral position correction is performed in the parking vehicle 1.

The temperature difference ΔT2 can be obtained and set by experiment in advance such that a neutral position fluctuation exceeding the allowed value is generated in the yaw rate sensor S_{Y} of the running vehicle 1 if the yaw rate neutral position is corrected when the temperature difference of the temperature TmpE of the engine room 3 of the parked vehicle 1 and the running vehicle temperature Tmp0 is more than ΔT2.

Furthermore, the time period ΔTlim, which is the time period from the time when the running vehicle was stopped to the time when the temperature TmpE of the engine room 3 is increased so that the temperature difference between the temperature TmpE and the running vehicle temperature Tmp0 reaches ΔT2 can be measured under various conditions and set.

The predetermined time period ΔTst is set to be shorter than the time period ΔTlim which is a time period from the time when the running vehicle stopped to the time when the temperature TmpE of the engine room 3 is increased so that the temperature difference between the temperature TmpE and the running vehicle temperature Tmp0 reachs ΔT2.

As described above, the predetermined time ΔTst according to the embodiment is different from that of the first example in that the predetermined time ΔTst according to the embodiment is set to be shorter than the time period ΔTlim which is set based on the allowed value of the neutral position fluctuation which is allowed in the yaw rate sensor S_{Y} of the vehicle 1. The predetermined time ΔTst according to the embodiment corresponds to "a second predetermined time" described in Claims.

"When the yaw rate neutral position correction condition is met" described in accordance with the embodiment corresponds to "when a status of the vehicle meets a predetermined condition".

With this configuration, the EPS_ECU 20 can correct the yaw rate neutral position when the temperature difference between the temperature TmpE of the engine room 3 and the running vehicle temperature Tmp0 is smaller than ΔT2 in a case where the running vehicle 1 is stopped.

Thus, the neutral position fluctuation generated in the yaw rate sensor S_{Y} of the running vehicle 1 can be made smaller than the allowed value.

If the neutral position fluctuation generated in the yaw rate sensor S_{Y} is smaller than the allowed value, the neutral position fluctuation has little influence on the steering angle middle point learning by the EPS_ECU 20. The smaller the neutral position fluctuation is, the more accurate the steering angle middle point learning by the EPS_ECU 20 becomes.

The allowed value of the neutral position fluctuation generated in the yaw rate sensor S_{Y} of the running vehicle 1 may be set appropriately based on the performance (sensitivity) of the yaw rate sensor S_{Y} or a driving performance required for the vehicle 1, etc.

Similarly to the first example, the predetermined time ΔTyaw is not a specified unique value but may be set appropriately based on the characteristic of the yaw rate sensor S_{Y} (e.g. half of the predetermined time ΔTst (ΔTyaw= (ΔTst)/2).

The predetermined time ΔTyaw may also be set to be equal to the predetermined time ΔTst).

For example, if the EPS_ECU 20 is configured to continuously correct the yaw rate neutral position when the vehicle 1 is stopped, the EPS_ECU 20 corrects the yaw rate neutral position even when the temperature TmpE of the engine room 3 is increased so that the temperature difference between the temperature TmpE and the running vehicle temperature Tmp0 becomes greater than ΔT2.

In this case, the EPS_ECU 20 determines as the yaw rate neutral position a value detected by the yaw rate sensor S_{Y} when the temperature difference between the temperature TmpE' of the engine room 3 of the parked vehicle 1 and the running vehicle temperature Tmp0 is greater than ΔT2 to correct the yaw rate neutral position. Thus, the neutral position fluctuation generated in the yaw rate sensor S_{Y} of the running vehicle 1 becomes greater than the allowed value.

As a result, the neutral position fluctuation generated in the yaw rate sensor Sly has a large influence, on the learning of the steering angle middle point by the EPS_ECU 20, which deteriorates the learning accuracy of the steering angle middle point by the EPS_ECU 20.

The embodiment is configured to solve the above problem, and the characteristic thereof is that in a case where the running vehicle 1 is stopped the EPS_ECU 20 corrects the yaw rate neutral position only once at the time t1 when the vehicle 1 has been stopped for the predetermined time ΔTst since the vehicle 1 was stopped.

With this configuration, the EPS_ECU 20 can determine as the yaw rate neutral position a value detected by the yaw rate sensor S_{Y} when the temperature difference between the temperature TmpE of the engine room 3 and the running vehicle temperature Tmp0 is smaller than T2 whereby the EPS_ECU 20 can correct the yaw rate neutral position.

In other words, the EPS_ECU 20 can determine as the yaw rate neutral position a value detected by the yaw rate sensor S_{Y} when the temperature TmpE of the engine room 3 is close to the ambient air temperature detected when the vehicle 1 is running and correct the yaw rate neutral position.

The configuration that the yaw rate neutral position is corrected, during the vehicle 1 is stopped, at the temperature TmpE of the engine room 3 which is close to the ambient air temperature detected when the vehicle 1 is running allows to make the neutral position fluctuation generated in the yaw rate sensor S_{Y} when the vehicle 1 is running be smaller.

For example, if the yaw rate neutral position is corrected when the temperature TmpE of the engine room 3 is the ambient air temperature at which the temperature difference between the temperature TmpE of the engine room 3 and the running vehicle temperature Tmp0 is smaller than ΔT2, it is possible to make the neutral position fluctuation generated in the yaw rate sensor S_{Y} when the vehicle 1 is running be smaller than the allowed value.

Thus, the yaw rate sensor S_{Y} can accurately detect the yaw rate of the running vehicle 1'. The yaw rate sensor S_{Y} does not output a value indicating that the yaw rate is not generated when the driver operates the steering wheel 21 and the running vehicle 1 is turning.

The steering angle middle point learning is a process performed when the vehicle 1 is running. When learning the steering angle middle point, the EPS_ECU 20 does not determine that the vehicle 1 runs straight if the vehicle 1 is actually turning.

Thus, the learning accuracy of the steering angle middle point is enhanced.

The EPS_ECU 20 according to the embodiment can correct the yaw rate neutral position of the yaw rate sensor S_{Y} only once when the temperature difference between the temperature TmpE of the engine room 3 and the running vehicle temperature Tmp0 is smaller than ΔT2. Thus, the EPS_ECU 20 according to the embodiment can prevent the yaw rate sensor S_{Y} from being affected by the temperature increase of the engine room 3 when correcting the yaw rate neutral position.

As the EPS_ECU 20 does not correct the yaw rate neutral position when the parking time of the vehicle 1 is so long that the temperature difference between the temperature TmpE of the engine room 3 and the running vehicle temperature Tmp0 becomes more than ΔT2, the EPS_ECU 20 makes it possible to prevent the yaw rate neutral position correction from being affected by the temperature increase of the engine room 3.

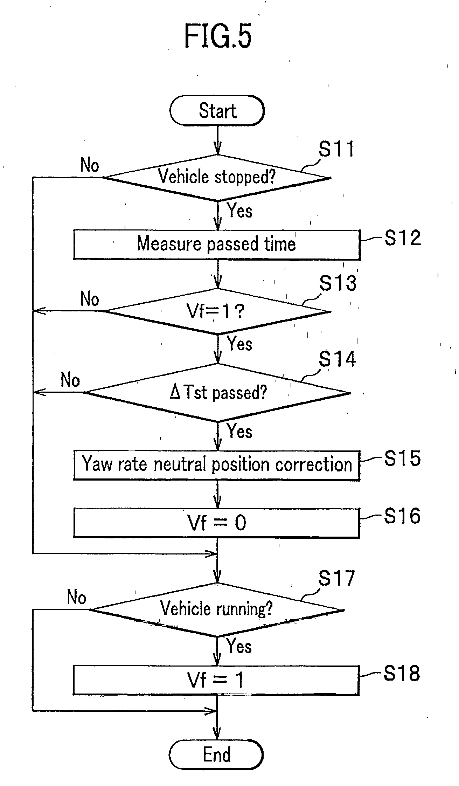

A process performed by the EPS_ECU 20 (see Fig. 1) to correct the yaw rate neutral position when the vehicle 1 (see Fig. 1) is stopped is described with reference to Figs. 1, 4 and 5. Fig. 5 is a flow chart showing the process performed by the EPS_ECU of the embodiment to correct the yaw rate neutral position.

This process may be incorporated as a sub routine into a program executed by the EPS_ECU 20 and may be executed at a predetermined timing (e.g. a predetermined time interval of 100m sec.).

As shown in Fig. 5, the EPS_ECU 20 checks whether or not the vehicle 1 is stopped in step S11. If the vehicle 1 is stopped (Yes), the processing proceeds to step S12. If the vehicle 1 is not stopped (No), the processing proceeds to step S 17.

In step S12 the EPS_ECU 20 measures a time passed since the vehicle 1 was stopped. In step S 13 the EPS_ECU 20 checks whether or not a value of a running determination flag Vf is 1.

Although omitted in the flowchart in Fig. 5, a value detected by the yaw rate sensor S_{Y} provided to the VSA_ECU 30 is input to the EPS_ECU 20 at a predetermined period via the VSA_ECU 30 and the CAN communication line 50. The EPS_ECU 20 measures a time passed since the vehicle 1 was stopped. When the elapsed time reaches the predetermined time ΔTyaw, the EPS_ECU 20 temporarily stores a value detected by the yaw rate sensor S_{Y} at this time.

The EPS_ECU 20 obtains the vehicle speed Vs based on a signal indicating the vehicle speed Vs input from the vehicle speed sensor SV, and determines that the vehicle 1 is stopped if the vehicle speed Vs is equal to or smaller than a predetermined value.

The EPS_ECU 20 determines that the vehicle 1 is stopped at the time when the vehicle speed Vs is changed from a value greater than the predetermined value to a value equal to or smaller than the predetermined value.

The running determination flag Vf is a flag which is set, for example, to be "1" when the vehicle 1 is running and is reset, for example, to be "0" when the EPS_ECU 20 corrects the yaw rate neutral position while the vehicle 1 is parked. In short, the running determination flag Vf indicates whether or not the vehicle 1 starts to run after the EPS_ECU 20 corrects the yaw rate neutral position while the vehicle 1 is parked.

As described above, the efficiency of taking outer air in the engine room 3 is decreased if the vehicle 1 is stopped, and the temperature TmpE of the engine room 3 is gradually increased by the heat of the engine (not shown) as shown in Fig. 4.

Thus, the EPS_ECU 20 determines that the temperature TmpE of the engine room 3 is increased when the vehicle 1 does not start running (i.e. the running determination flag Vf is "0") after the yaw rate neutral position is corrected while the vehicle 1 is parked (No in step S13). Then the processing proceeds to step S17.

On the other hand, if the running determination flag Vf is "1" (Yes in step S13), the EPS_ECU 20 determines that the running of the vehicle 1 prevents the temperature TmpE of the engine room 3 from being increased, and thus the temperature TmpE of the engine room 3 is close to the running vehicle temperature Tmp0. The processing then proceeds to step S14.

In step S14, the EPS_ECU 20 checks whether or not the predetermined time ΔTst has passed since the vehicle 1 was stopped. If the predetermined time ΔTst has passed (Yes) the processing proceeds to step S 15. If the predetermined time ΔTst has not passed (No), the processing proceeds to step S 17. In step S15 the EPS_ECU 20 corrects the yaw rate neutral position as the predetermined time ΔTst has passed since the vehicle 1 was stopped. Specifically, the EPS_ECU 20 determines as the yaw rate neutral position a value detected by the yaw rate sensor S_{Y} when the predetermined time ΔTyaw has passed since the vehicle 1 was stopped.

In step S16 the EPS_ECU 20 sets the running determination flag Vf to be "0". The processing then proceeds to step S17.

In step S17 the EPS_ECU20 checks whether or not the vehicle 1 is running. If the EPS_ECU 20 determines that the vehicle 1 is running (Yes), the processing proceeds to step S 18 and sets the running determination flag Vf to be "1". If the EPS_ECU20 determines that the vehicle 1 is not running in step S17 (No), the processing is terminated without changing the value of the running determination flag Vf. The processing then returns to step S 11 and repeats the following steps.

In step S 17, the EPS_ECU 20 determines that the vehicle 1 starts to run when the vehicle 1 runs for a predetermined time set in advance at a speed equal to or faster than a predetermined speed set in advance. The predetermined speed and the predetermined time may be set to be a speed and a time required for the temperature of the engine room 3 of the vehicle 1 to be decreased to a temperature close to the ambient temperature.

As shown in the flow chart of Fig. 5, the EPS_ECU 20 (see Fig. 1) of the embodiment does not correct the yaw rate neutral position when the running determination flag Vf is "0".

With this configuration, the EPS_ECU20 can correct the yaw rate neutral position only once when the vehicle 1 (see Fig. 1) is stopped.

If the vehicle 1 (see Fig. 1) is stopped, the temperature TmpE of the engine room 3 (see Fig. 1) is gradually increased as shown in Fig. 4. Thus, if the EPS_ECU 20 (see Fig. 1) is configured to continuously correct the yaw rate neutral position while the vehicle 1 is parked, the yaw rate neutral position is corrected even when the temperature TmpE of the engine room 3 becomes high.

As described above, a detected value of the yaw rate sensor S_{Y} (see Fig. 1) is largely fluctuated depending on the variation of the sensor temperature which is associated with the ambient air temperature change. Therefore, if the yaw rate neutral position is corrected when the temperature TmpE of the engine room 3 (see Fig. 1) is high, the neutral position fluctuation is generated in the yaw rate sensor S_{Y} when the vehicle 1 (see Fig. 1) starts to run and the temperature of the engine room 3 becomes low.

The EPS_ECU 20 according to the embodiment corrects the yaw rate neutral position only once when the predetermined time ΔTst has passed for the first time with the vehicle 1 being parked since the running vehicle was stopped. Thus, the EPS_ECU 20 can correct the yaw rate neutral position when the temperature difference between the temperature TmpE of the engine room 3 and the running vehicle temperature Tmp0 is small (e.g. smaller than ΔT2 shown in Fig. 4). In other words, the EPS_ECU 20 can correct the yaw rate neutral position when the sensor temperature of the yaw rate sensor S_{Y} is close to that when the vehicle 1 is running.

The yaw rate sensor S_{Y} on which the yaw rate neutral position has been performed at the sensor temperature close to the sensor temperature when the vehicle 1 is running can accurately detect the yaw rate of the running vehicle 1.

Thus, the EPS_ECU 20 does not learn the steering angle middle point when the driver operates the steering wheel 21 (see Fig. 1) and the vehicle 1 is turning, for example, and thus the learning accuracy of the steering angle middle point is enhanced.

When the learning accuracy of the steering angle middle point is enhanced, the EPS_ECU 20 can improve the accuracy of the reaction force control of the steering wheel 21, whereby the driver is preferably prevented from feeling uncomfortable.

As shown in Fig. 5, as there is no process for measuring the temperature of the engine room 3 of the vehicle 1 in the embodiment, the method of the embodiment can be applied to the vehicle 1 which does not include a temperature measuring means such as a temperature indicator.

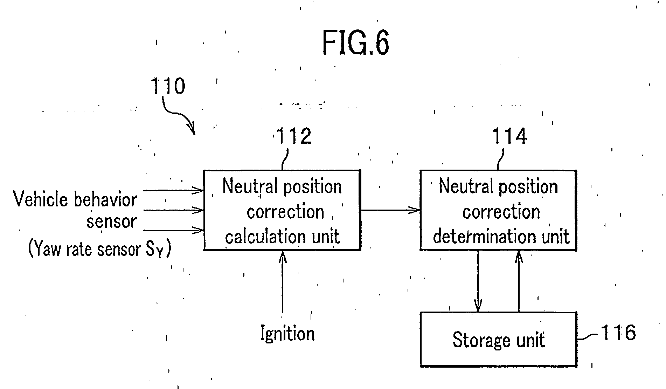

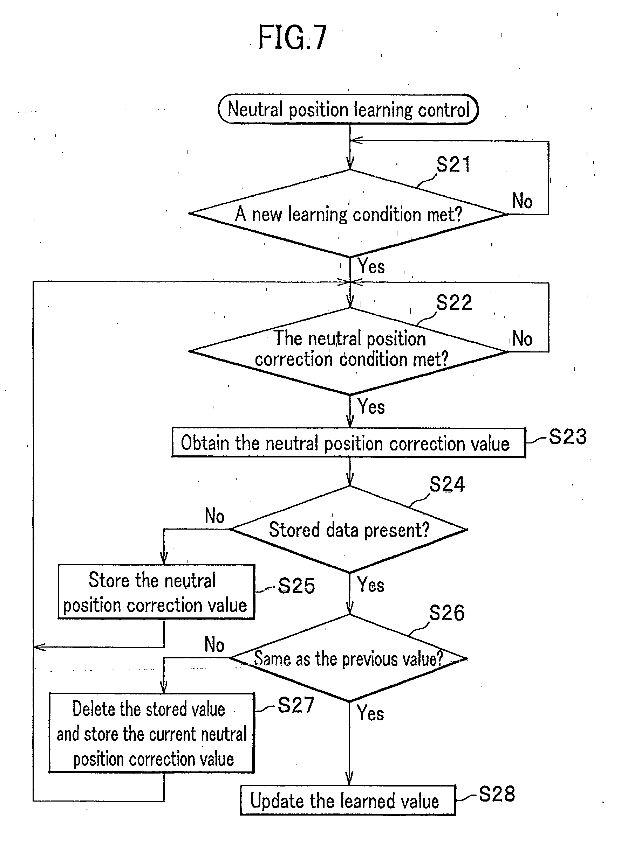

Next, a method according to a second example of the present invention for correcting a reference point of a sensor and a reference point correcting device to which the method of the second example is applied are described with reference to Figs. 6 and 7. Fig. 6 is a block diagram showing the reference point correcting device to which the method of the third embodiment is applied. Fig. 7 is a flow chart showing the control process for correcting a reference point of a sensor according to the third embodiment.

As shown in Fig. 6, a reference point correction device 110 of a vehicle behavior sensor related to the present invention includes a neutral position correction calculation unit (a reference point correction calculation unit) 112 to which an ignition signal or signals of a plurality of vehicle behavior sensors are input; an neutral position correction determination unit (a reference point correction determination unit) 114 to which a value (calculated value) obtained by the neutral position correction calculation unit 112 is input and a storage unit 116 for storing the value (calculated value) obtained by the neutral position correction calculation unit 112.

The vehicle behavior sensor described here corresponds to as "a sensor" described in Claims.

The method of the third embodiment is described below by using an example where a vehicle behavior sensor is the yaw rate sensor S_{Y}, however, the method of the second example may be applied to other types of vehicle behavior sensors as long as the vehicle behavior sensors need neutral position learning. The neutral position learning of the second example corresponds to "correcting a reference point of a sensor" .

The neutral position correction calculation unit 112 determines whether or not a new learning condition is met in step S21 in Fig. 7. It is determined that a new learning condition is met in step S21 (Yes) if any one of the following conditions are met, for example: (1) when the ignition switch is detected to be turned ON; (2) when the travel distance is detected to reach a predetermined distance; (3) when a running time is detected to be a predetermined time; (4) when the temperature of a place where the vehicle behavior sensor is arranged, such as an engine room, is detected to exceed a predetermined threshold value; and (5) the temperature of the engine room is detected to be decreased to be equal to or smaller than a predetermined threshold value after the temperature of the engine room exceeds the predetermined threshold value. If any one of the above conditions is met, the new learning condition is determined to be met, and the processing proceeds to step S22 and starts to learn a new neutral position. In short, the neutral position correction calculation unit 112 monitors the status of the ignition switch, the travel distance, the running time and the temperature of the engine room.

If the new learning condition is not met in step S21 (No), the processing returns to step S21 and repeats to determine whether or not the new learning condition is met.

Incidentally, the foregoing new learning conditions are just examples and are not limited to those described above.

In step S22, the neutral position correction calculation unit 112 checks whether or not the neutral position correction condition (reference point correction condition) is met.

Two patterns of the neutral position correction condition in step S22 can be set corresponding to two vehicle states which are a stopped state and a straight running state in which the vehicle runs at a constant speed. The neutral position correction condition for the stopped state is the Condition B described in the first example. The neutral position correction condition for the straight running state in which the vehicle runs at a constant speed is the conditions C described in the first example. The conditions B and C correspond to "reference point correction condition" .

Only when the value detected by the yaw rate sensor S_{Y} and other signals input to the neutral position correction calculation unit 112 meet the neutral position correction condition (Yes), the processing proceeds to step S23 where the neutral position correction calculation unit 112 obtains (calculates) as an neutral position corrected value (reference point correction value) the yaw rate γ output from the yaw rate sensor S_{Y} at the time. In short, if the neutral position correction condition is met in step S22, a value detected by the yaw rate sensor S_{Y} is determined to be the yaw rate neutral position to correct the yaw rate neutral position.

If the neutral position correction value is not obtained (i.e. the neutral position correction condition is not met) in step S22 (No), signals from the yaw rate sensor S_{Y} and other vehicle behavior sensors are repeatedly input to the neutral position correction calculation unit 112. In short, the processing of step S22 is repeatedly performed to determine whether or not the neutral position correction condition is met.

Next, in step S24 the neutral position correction determination unit 114 reads out a previous yaw rate correction value stored in the storage unit 116 and determines whether or not there is the previous yaw rate correction value. At this time, if the previous neutral position correction value is not stored (No), the processing proceeds to step S25 where the present neutral position correction value is stored in the storage unit 116 as the neutral position correction value (stored data), and the processing returns to step S22.

It is to be noted that when a new learning is initiated by turning on the ignition, the previously learned value (neutral position correction value) is cleared and not stored. In this example, the previous neural point correction value which is obtained within a predetermined time from the start of the new learning, such as 5 to 30 minutes, is compared to the present neutral position correction value in step S26. Thus, the processing of step S23 for obtaining the neutral position correction value is executed at least two times.

If the neutral position correction determination unit 114 reads out the previous yaw rate neutral position correction value in step S24 (Yes), the processing proceeds to step S26 where the neutral position correction determination unit 114 compares a neutral position correction value (the present neutral position correction value) obtained in step S23 executed just before step S24 with the previous neutral position correction value (the stored neutral position correction value) and determines whether or not they are equal. At this time, in the neutral position correction determination unit 114 a threshold value is set in advance which corresponds to an allowed difference between the previous neutral position correction value and the present neutral position correction value for determining whether or not they are substantially equal. The neutral position correction determination unit 114 thus determines whether or not the previous neutral position correction value and the present neutral position correction value are substantially equal (i.e. the difference between the previous neutral position correction value and the present neutral position correction value is within a threshold value).

If the previous neutral position correction value and the present neutral position correction value are determined to be substantially equal in step S26 (Yes), the processing proceeds to step S28. In step S28 the neutral position correction determination unit 114 learns (corrects and updates) the present neutral position correction value as the learned value of the yaw rate γ (reference value). The neutral position (reference point) which is updated in step S28 is applied to various control processes which need the neutral position learning of the yaw rate sensor S_{Y}.

On the other hand, if the previous neutral position correction value and the present neutral position correction value are determined not to be equal in step S26 (No), the neutral position correction determination unit 114 determines that the vehicle behavior at the time when the previous neutral position correction value was obtained (calculation time point) is different from the vehicle behavior at the time when the present neutral position correction value is obtained (calculation time point). Thus, the neutral position correction is not performed.

The neutral position correction is performed "if substantially equal values (of the neutral position correction values) are continuously calculated" in the second example. Therefore, if "No" is determined in step S26, the processing proceeds to step S27 to clear the neutral position correction value which has been stored in step S25 and alternately stores the present neutral position correction value obtained in step S23 in the storage unit 116. Then, the processing returns to step S22.

Steps S21 to S23 of the flowchart shown in Fig. 7 corresponds to "calculating a reference point correction value" described in Claims. Steps S26 to S28 corresponds to "determining a reference point correction" described in Claims.

Thus, even if the neutral position correction calculation unit 112 wrongly determines in step S22 that the neutral position correction condition is met in a vehicle running state where the neutral position is not to be detected and the processing proceeds to step S23 to obtain (calculates) the neutral position correction value, it is possible to avoid wrongly updating a learned value (false learning of the neural point) in step S28 and to prevent the generation of difference in the control amount between the right yaw rate and left yaw rate which are the same value because the obtained value is not determined to be the neutral position correction value in a reference point correction determination step in step S26 until the neutral position correction values continuously calculated in a reference point correction calculating step are equal continuously

In the second example, the neutral position correction values can be narrowed down by the reference point correction condition before the reference point correction determining step, which allows the vehicle to appropriately cope with the fluctuation of the detected value of the vehicle behavior sensor in the running vehicle.

For example, in the neutral position correction of the yaw rate γ in a case where a vehicle gently curves on a cant road which is inclined to the inner turning side and the steering force is hardly generated even though the vehicle is actually turning (there is a turning radius), a correction determination time period for comparing the previous neutral position correction value with the present neutral position correction value is set longer than the time period in which the vehicle runs on such a cant road. Thus, a value detected when the vehicle is running on the cant road is not continuously stored for comparison. In short, either one of the previous neutral position correction value and the present neutral position correction value is the value detected when the vehicle runs on the cant road, and the previous neutral position correction value and the present neutral position correction value becomes to be different. Thus, the neutral point correction is not performed, which prevents the vehicle from falsely learning a neutral point detected when the vehicle runs on the cant road (reference point correction), which allows to prevent the generation of the right and left difference of the reaction force controls for the steering wheel.

For example, the second example is mainly explained using a yaw rate sensor as a vehicle behavior sensor for example, however, the third embodiment can be applied to any sensor which is provided to a vehicle and needs a neutral point correction (reference point correction), such as a lateral acceleration sensor, a front and rear acceleration sensor and a steering angle sensor.

In step S24, the stored data may not be a present learned value but may be a value which was learned at the time when the ignition was turned on previously.

In the second example, it is described that the previous neutral position correction value and the present neutral position correction value are compared, however, an neutral position correction value detected for the last time but one, the previous neutral position correction value and the present neutral position correction value (neutral position correction value) may be compared to determine whether or not "substantially equal values (of the neutral position correction value) are continued".

Next, a sensor reference point correction method of a third example and a VSA_ECU to which the sensor reference point correction method is applied are described with reference to the accompanying drawings as appropriate.

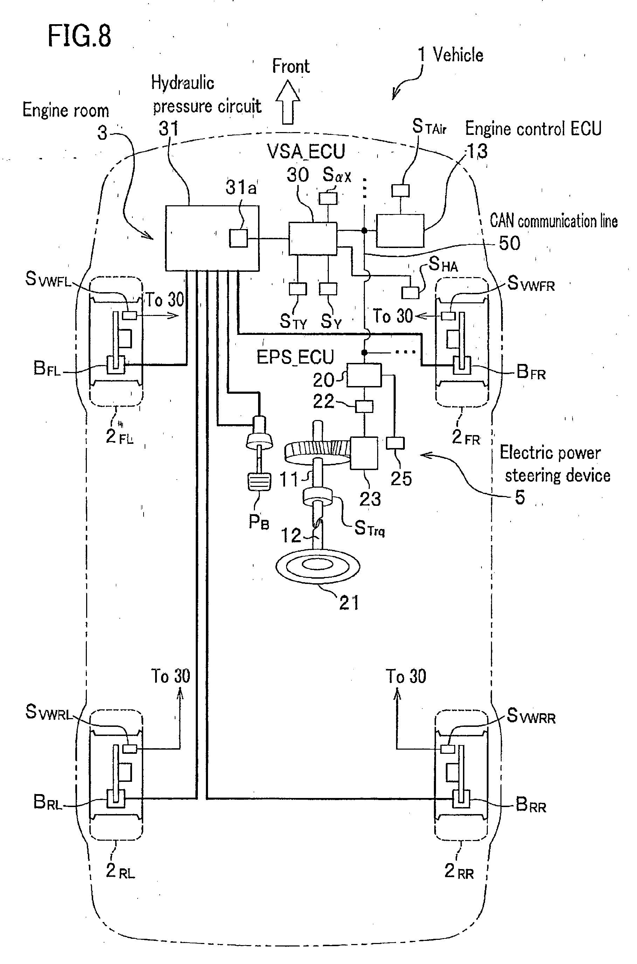

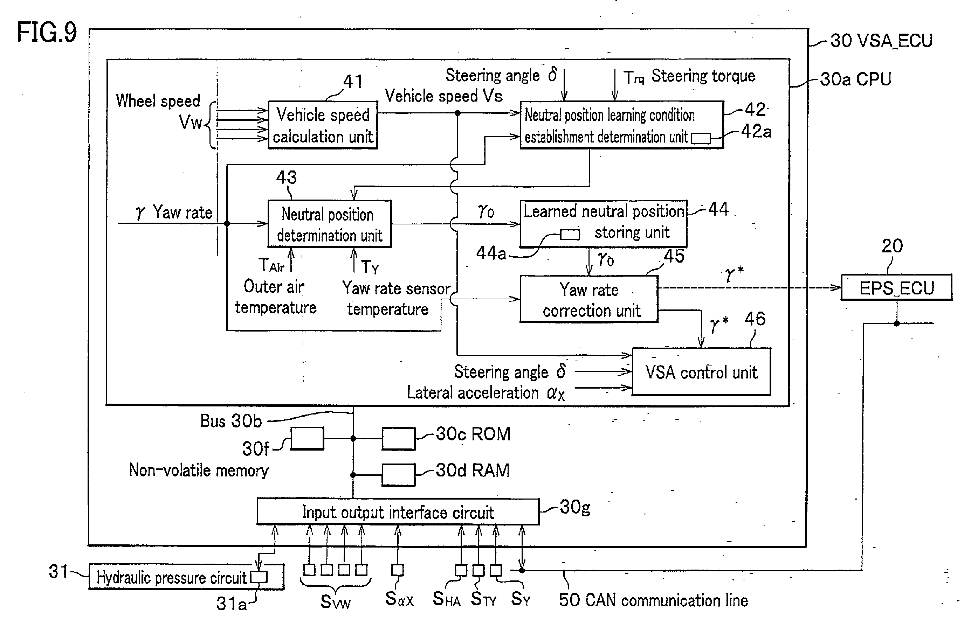

Firstly, a core part of the vehicle 1 including the VSA_ECU 30 is described with reference to Figs. 8 and 9. Fig. 8 is a block diagram showing a core part of the vehicle 1 including the VSA_ECU according to the third example. Fig. 9 is a functional block diagram of the VSA_ECU according to the third example.

As shown in Fig. 8, the vehicle 1 includes a steering mechanism, an electric power steering device 5, an engine control ECU 13 which controls the engine (not shown), an EPS_ECU (vehicle behavior control device) 20 which is a control function unit of an electric power steering device 5 and a VSA_ECU 30 which controls the vehicle behavior by combining the ABS function and the TSC function including a braking control function.

The steering mechanism of a vehicle 1 is configured such that a steering shaft 12 is connected via an universal joint to a pinion shaft 11 integrally revolving with a pinion gear (not shown) which is meshed with a rack of a rack shaft (not shown) of a rack and pinion mechanism (not shown). Further, the steering wheel 21 is attached to the steering shaft 12.

When a driver operates the steering wheel 21, the pinion gear is revolved to move the rack shaft 4a right or left, whereby the right and left wheels 2_{FL}, 2_{FR}, which are steered wheels connected to the rack shaft 4a, are steered.

The electric power steering device 5 includes a motor 23 which generates a steering assistance force (steering assistance torque) reducing the steering force generated by the driver to operate the steering wheel 21 and applies the steering assistance force to the steering mechanism.

The gear directly connected to the output shaft of the motor 23 is meshed with a warm wheel gear which is provided to the pinion shaft 11. When the driver operates the steering wheel 21, the output shaft of the motor 23 is revolved, generating the steering assistance torque which is applied to the pinion shaft 11 to reduce the steering force.

The EPS_ECU 20, which is the control unit of the electric power steering device 5, includes a micro computer including a CPU (Central Processing Unit) (not shown), a ROM (Read Only Memory), a RAM (Random Access Memory) and interfaces, etc. and a peripheral circuit. The CPU executes a program stored in the ROM to drive the motor 23 via the motor driving circuit 22.

The motor driving circuit 22 is an electric power source which includes a switching element for supplying electric power to the motor 23, which is a brushless motor.

The motor 23 includes a rotation angle sensor 25 which detects the rotation angle of the motor 23, and a signal of the rotation angle sensor 25 is input to the EPS_ECU20. As the rotation angle sensor 25, a resolver is used for example.

A torque sensor S_{Trq} is attached to the pinion shaft 11, and detects a steering torque generated when the driver operates the steering wheel 21. A signal indicating the steering torque is input to the EPS_ECU 20.

As described later, the EPS_ECU 20 obtains information such as the steering angle (vehicle behavior information) δ, a corrected yaw rate (vehicle behavior information) γ*, a lateral acceleration (vehicle behavior information) αₓ, the vehicle speed (vehicle behavior information) Vs from the VSA_ECU 30 via the CAN (Controller Area Network) communication line 50. The EPS_ECU 20 uses the above described information and information such as the rotation angle of the motor 23 and the steering torque (vehicle behavior information) T_{rq} to control the motor 23 based on a vehicle behavior, such as the running state (turning or running straight) of the vehicle and the vehicle speed Vs to generate the steering assistance force for reducing the steering force of the driver or to generate the reaction force against the rotation operation direction of the steering wheel 21.

In the control for generating the reaction force, the EPS_ECU 20 uses an actual yaw rate (a corrected yaw rate γ* which is obtained by correcting the yaw rate neutral position).

The engine control ECU 13 includes a micro computer including a CPU, a ROM, a RAM and input/output interfaces, etc.; a peripheral circuit; and a FI drive circuit for driving a fuel injector. To the engine control ECU 13, various sensor signals such as an accelerator position sensor (not shown), a crank pulse sensor (not shown) and a TDC sensor (not shown) needed to control the engine are input. Sensors needed to control the engine also includes an intake air temperature sensor (an outer air temperature detection unit) S_{TAir} (see Fig. 8) for detecting the intake air temperature (also referred to as "outer air temperature"). The CPU executes a program stored in the ROM to control the output of the engine or to output information other ECUs need, such as an engine rotation speed or an outer temperature T_{Air} (see Fig. 9) via the CAN communication line 50 (see Fig. 9).

As shown in Fig. 9 the VSA_ECU 30 includes a micro computer including a CPU30a, a ROM30c, a RAM30d, an non rewritable non volatile memory (reference point storage unit) 30f, an input/output interface (not shown) and a bus 30b which connects them and a peripheral circuit (shown as "input/output interface circuit 30g" in Fig. 9). The CPU30a executes a program stored in the ROM to control the vehicle behavior. The VSA_ECU 30 is arranged, for example, in the engine room 3.

As shown in Fig. 9, the following signals are input to the VSA_ECU 30: a signal from a steering angle sensor S_{HA} which detects the steering angle δ (see Fig. 9) of the wheels 2_{FL}, 2_{FR} (front wheels 2_{FL}, 2_{FR}), which are steered wheels; signals indicating the wheel speed VW (see Fig. 9) of each wheels 2_{FL}, 2_{FR} , 2_{RL} , 2_{RR} of the vehicle 1 which is output from the wheel speed sensors S_{VWFL}, S_{VWFR}, S_{VWRL}, S_{VWRR} for detecting the wheel speed; a signal indicating a yaw rate γ (see Fig. 9) which is a value detected by the yaw rate sensor (vehicle behavior sensor) S_{Y} arranged in the engine room 3; a signal indicating the yaw rate sensor temperature T_{Y} (see Fig. 9) from a temperature sensor (sensor temperature detection unit, a vehicle behavior sensor temperature detection unit) S_{TY} which detects the temperature of the yaw rate sensor S_{Y}; and a signal indicating a lateral acceleration α_{X} (see Fig. 9) from a lateral acceleration sensor S_{αX} which detects the lateral acceleration of the vehicle 1.

The yaw rate sensor temperature T_{Y} corresponds to "temperature of the vehicle behavior sensor" described in Claims.

Hereinafter, the wheels 2_{FL}, 2_{FR}, 2_{RL}, 2_{RR}, wheel speed sensors S_{VWFL}, S_{VWFR}, S_{VWRL}, S_{VWRR} and braking devices B_{FL}, B_{FR}, B_{FL}, B_{RR}, which are described later, are just referred to as "wheel 2", "wheel speed sensor S_{VW}" and "braking device B", respectively, if they do not need to be distinguished.

It is to be noted that the wheel speed sensor S_{VW} is a sensor which detects the number of pulses per a unit time as the wheel speed of the wheel 2.

The input/output interface circuit 30g, which is representatively shown as the peripheral circuit, includes a signal processing circuit for processing sensor signals, such as a filter circuit and a signal processing unit for the CAN communication.

The yaw rate sensor S_{Y} and the temperature sensor S_{TY} is incorporated in the VSA_ECU 30, for example. The yaw rate sensor S_{Y} is a sensor which uses a semiconductor element, and its detected value is varied depending on the temperature fluctuation of the yaw rate sensor S_{Y}.

The VSA_ECU 30 is connected to a braking device B (shown as "B_{FL}, B_{FR}, B_{FL}, B_{RR}" in Fig. 8) provided to each wheel 2_{FL}, 2_{FR}, 2_{RL}, 2_{RR} such that the VSA_ECU 30 is communicated with a hydraulic circuit control unit 31a which drives a control valve (not shown) included in a hydraulic circuit 31 which individually supplies a hydraulic pressure to each braking device B. The VSA_ECU 30 controls each braking device B_{FL}, B_{FR}, B_{FL}, B_{RR} via the hydraulic circuit control unit 31a by outputting a control signal to the hydraulic circuit control unit 31a or receiving a hydraulic pressure signal from the hydraulic circuit control unit 31 a.

The VSA_ECU 30 is communicated to the EPS_ECU 20 via the CAN communication line 50 and is configured such that the VSA_ECU 30 and the EPS_ECU20 can transmit data with each other. The VSA_ECU 30 outputs information such as the steering angle δ, the corrected yaw rate γ* the lateral acceleration α_{X} and the vehicle speed Vs to the EPS_ECU 20 via the CAN communication line 50 and also outputs output power suppressing instruction information to the engine control ECU 13 via the CAN communication line 50 as necessary. In contrast, the VSA_ECU 30 obtains information on steering torque from the EPS_ECU20 via the CAN communication line 50.

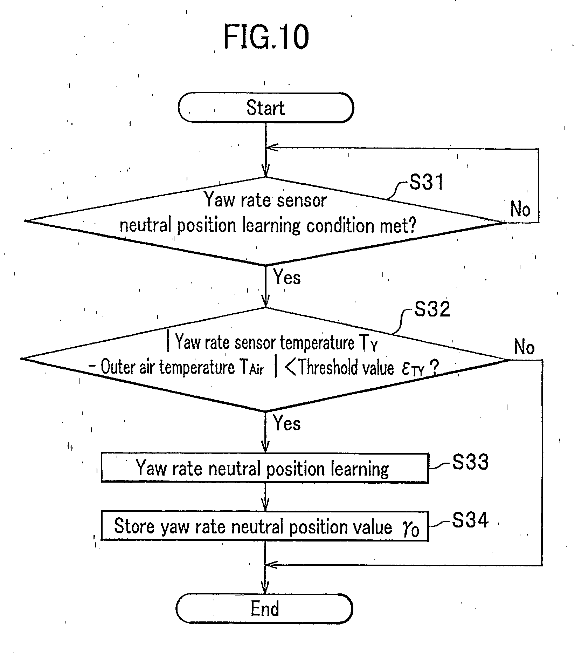

Next, a neutral position learning method for learning the neutral position of a signal from the yaw rate sensor S_{Y} in the VSA_ECU 30 (i.e. a value detected by the yaw rate sensor S_{Y} when the yaw rate γ of the vehicle 1 is 0) is described with reference to Figs. 9 and 10. Fig. 10 is a flow chart showing the control process according to the third example for learning the yaw rate neutral position.

The CPU 30a of the VSA_ECU 30 includes, as functional units realized by executing programs stored in the ROM 30c, a vehicle speed calculation unit 41, a neutral position learning condition establishment determination unit (reference point correction condition establishment determination unit) 42, a neutral position determination unit 43, a learned neutral position storing unit (reference point storage unit) 44, a yaw rate correction unit (correction unit) 45 and a VSA controlling unit (vehicle behavior control device) 46.

The yaw rate sensor S_{Y} and the neutral position learning condition establishment determination unit 42, the neutral position determination unit 43, the learned neutral position storing unit 44, the yaw rate correction unit 45 and the non volatile memory 30f of the VSA_ECU 30 corresponds to "vehicle behavior detection system" described in Claims.

The vehicle speed calculation unit 41 reads signals indicating the wheel speed V_{W} of each wheel speed sensor Svw, calculates the vehicle speed Vs of the vehicle 1, and outputs the vehicle speed Vs to the neutral position learning condition establishment determination unit 42 and the VSA controlling unit 46.

The neutral position learning condition establishment determination unit 42 includes neutral position learning condition data 42a stored in the ROM 30c in advance and determines whether or not the neutral position learning condition of the yaw rate sensor S_{Y} is met based on the present vehicle speed Vs, the steering angle δ, the steering torque T_{rq} and the yaw rate γ which is the detected value. If the neutral position learning condition is met, the neutral position learning condition establishment determination unit 42a outputs a signal which allows the neutral position learning to the neutral position determination unit 43. If the neutral position learning condition is not met, the neutral position learning condition establishment determination unit 42a does not output a signal which allows the neutral position learning to the neutral position determination unit 43.

The present vehicle speed Vs, the steering angle δ, the steering torque Trq and the yaw rate γ which is the detected value corresponds to "vehicle behavior information" described in Claims.

The neutral position learning condition of the yaw rate sensor S_{Y} is the same as that of the first example. If any one set of the condition B and the conditions C is met, the neutral position learning condition establishment determination unit 42 determines that the neutral position learning condition is met.

Conditions B and C according to the third example correspond to "sensor reference point correction condition".

When the neutral position determination unit 43 receives the signal which allows the neutral position learning from the neutral position learning condition establishment determination unit 42, the neutral position determination unit 43 compares an outer air temperature T_{Air} with the yaw rate sensor temperature T_{Y}. If the difference between the outer air temperature T_{Air} and the yaw rate sensor temperature T_{Y} is smaller than the threshold value ε_{TY}, the neutral position determination unit 43 outputs the current yaw rate γ which is the detected value to the learned neutral position storing unit 44 as the yaw rate neutral position value (the reference point of the yaw rate sensor SY) γ0. The learned neutral position storing unit 44 stores the yaw rate neutral position value γ₀ which is output from the neutral position determination unit 43 in the neutral position data unit 44a in the non volatile memory 30f. The yaw rate correction unit 45 outputs the yaw rate γ* which is obtained by correcting the current yaw rate γ based on the corrected neutral position to the VSA controlling unit 46. The yaw rate correction unit 45 outputs the yaw rate γ* on which the neutral position correction has been performed to the EPS_ECU20 via the CAN communication.

The VSA controlling unit 46 performs the VSA control of the vehicle 1 by controlling the braking devices B of each wheel 2 via the hydraulic circuit 31 based on the vehicle speed Vs, the yaw rate γ* which has been corrected based on the corrected neutral position, the steering angle δ, and the lateral acceleration α_{X}. The VSA controlling unit 46 also performs a braking control via the hydraulic circuit 31 and monitors the wheel speed V_{W} of the wheel 2 to perform the ABS control to prevent the wheels 2 from being locked when the driver steps on the brake pedal PB (see Fig. 8).

Next, the method for learning a neutral position of the yaw rate sensor S_{Y} is described with reference to Fig. 10.

In step S31, it is determined whether or not a condition of learning the neutral position of the yaw rate sensor S_{Y} is met based on the current vehicle speed Vs, the steering angle δ, the steering torque Trq and the yaw rate γ which is a detected value. If the condition of learning the neutral position is met (Yes), the processing proceeds to step S32. If the condition of learning the neutral position is not met (No), the processing repeats step S31. In step S32, the neutral position determination unit 43 checks whether or not the difference between the outer air temperature T_{Air} and the yaw rate sensor temperature T_{Y} is smaller than a threshold value ε_{TY}. If the difference between the outer air temperature T_{Air} and the yaw rate sensor temperature T_{Y} is smaller than the threshold value ε_{TY} (Yes), the neutral position determination unit 43 outputs the current yaw rate γ, which is the detected value, to the learned neutral position storing unit 44 as the yaw rate neutral position value γ₀ (obtains the reference point), and the processing proceeds to step S33. If the difference between the outer air temperature T_{Air} and the yaw rate sensor temperature T_{Y} is not smaller than the threshold value ε_{TY} (No), a series of the neutral position learning process proceeds to the end and is terminated (not obtain the reference point) and returns to step S31.

In step S33, the learned neutral position storing unit 44 reads the yaw rate neutral position value γ₀ which is output from the neutral position determination unit 43 ("yaw rate neutral position learning process"), and then stores the yaw rate neutral position value γ₀ in the neutral position data unit 44a of the non volatile memory 30f ("storing the yaw rate neutral position value" in step S34).

A series of control for learning the neutral position of the yaw rate sensor S_{Y} is then terminated.

In the fourth embodiment, the neutral position of the yaw rate sensor S_{Y} is learned only when the temperature of the vehicle 1 (see Fig. 8) is at the yaw rate sensor temperature T_{Y} which is close to the outer air temperature T_{Air}. Thus, it is possible to obtain an accurate corrected yaw rate γ* as an actual yaw rate of the running vehicle 1 (i.e. the vehicle 1 where the temperature of the engine room 3 (see Fig. 8) is close to the outer air temperature T_{Air} due to an intake outer air). For example, if the temperature of the engine room 3 is increased as the time passes since the running vehicle 1 was stopped, it is possible to prevent the stopped car where the temperature of the yaw rate sensor S_{Y} is high from learning the neutral position of the yaw rate sensor S_{Y}.

Obtaining an accurate yaw rate allows the EPS_ECU 20 to enhance the accuracy of the reaction force control of the steering wheel 21, whereby the driver does not feel uncomfortable in the behavior of the vehicle 1 and the rotation operation amount of the steering wheel 21.

The VSA_ECU 30 is described to learn the neutral position of the yaw rate sensor S_{Y} in the third example however, the example of the present invention is not limited to this. The VSA_ECU 30 may transmit the yaw rate γ which is the detected value to the EPS_ECU 20 via the CAN communication line 50 and the EPS_ECU 20 may learn the neutral position in the method as described above and may transmit the yaw rate γ* which has been corrected based on the corrected neutral position to other ECU, such as the VSA_ECU 30, via the CAN communication line 50 to use the yaw rate γ* which has been corrected based on the corrected neutral position in the VSA control. An example of the present invention may also be configured that the yaw rate γ which is the detected value of the yaw rate sensor S_{Y} is directly input to the EPS_ECU 20, and the EPS_ECU 20 learns the neutral position by the method as described above and transmits the yaw rate γ* which has been corrected based on the corrected neutral position to other ECU, such as the VSA_ECU 30, via the CAN communication line 50 to use the yaw rate γ* which has been corrected based on the corrected neutral position in the VSA control.

"The temperature of the vehicle behavior sensor" described in Claims corresponds to "yaw rate sensor temperature T_{Y}" in the third example and may be the temperature of the yaw rate sensor S_{Y} itself or the environmental temperature of the yaw rate sensor S_{Y}.

Next, an electric power steering device according to a fourth example of the present invention is described with reference to the accompanying drawings. Main components of the vehicle 1 including the electric power steering device 5 according to the fourth example are the same as those of the vehicle 1 in Fig. 8 which is described in the third example.

Firstly, the main components of the vehicle 1 including the EPS_ECU20 and the VSA_ECU 30 are described with reference to Figs. 8, 11 and 12. The descriptions of the components of the fourth example which correspond to those of the third example are omitted.

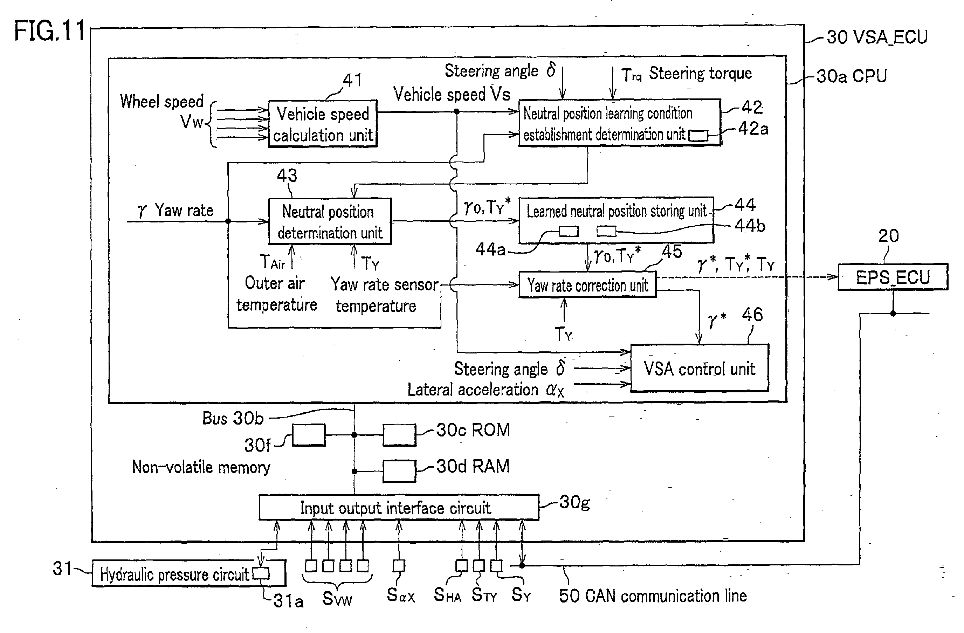

Next, a neutral position learning method performed by the VSA_ECU 30 for learning the neutral position of signals from the yaw rate sensor S_{Y} (i.e. a value detected by the yaw rate sensor S_{Y} when the yaw rate γ of the vehicle 1 is 0) is described with reference to Fig. 11. Fig. 11 is a functional block diagram of the VSA_ECU according to the fourth example.

The CPU 30a of the VSA_ECU 30 includes a vehicle speed calculation unit 41, an neutral position learning condition establishment determination unit 42, an neutral position determination unit 43, a learned neutral position storing unit (reference point storage unit, the reference point correction time temperature storage unit) 44, a yaw rate correction unit 45 and a VSA controlling unit 46 as functional configuration units which are realized by executing the programs stored in the ROM 30c.

The vehicle speed calculation unit 41 reads signals indicating the wheel speed V_{W} from the wheel speed sensor S_{VW}, calculates the vehicle speed Vs of the vehicle 1 and outputs the vehicle speed Vs to the neutral position learning condition establishment determination unit 42 and the VSA controlling unit 46.

The neutral position learning condition establishment determination unit 42 includes a neutral position learning condition data 42a which is stored in the ROM 30c in advance, and determines whether or not the learning condition of the neutral position of the yaw rate sensor S_{Y} is met based on the current vehicle speed Vs, steering angle δ, steering torque Trq and the yaw rate γ which is the detected value. If the learning condition is met, the neutral position learning condition establishment determination unit 42 outputs a signal allowing the learning of the neutral position to the neutral position determination unit 43. If the learning condition is not met, the neutral position learning condition establishment determination unit 42 does not output a signal allowing the learning of the neutral position to the neutral position determination unit 43.

If any one set of the Condition B and the Conditions C of the first example is met, the neutral position learning condition establishment determination unit 42 determines that the neutral position learning condition is met.

When the neutral position determination unit 43 receives the signal allowing the neutral position learning from the neutral position learning condition establishment determination unit 42, the neutral position determination unit 43 compares the outer air temperature T_{Air} to the yaw rate sensor temperature T_{Y}. If the difference between the outer air temperature T_{Air} and the yaw rate sensor temperature T_{Y} is smaller than the threshold value ε_{TY}, the neutral position determination unit 43 outputs the current yaw rate γ which is the detected value to the learned neutral position storing unit 44 as the yaw rate neutral position value γ₀. The neutral position determination unit 43 also outputs the yaw rate sensor temperature T_{Y} at the time to the learned neutral position storing unit 44 as a neutral position learning time temperature T_{Y} *.

The learned neutral position storing unit 44 stores the yaw rate neutral position value γ0 output from the neutral position determination unit 43 in the neutral position data unit 44a of the non volatile memory (reference point storage unit, reference point correction time temperature storage unit) 30f. The learned neutral position storing unit 44 also stores the neutral position learning time temperature T_{Y}* in the neutral position learning time temperature data unit 44b of the non volatile memory 30f. The yaw rate correction unit 45 outputs the yaw rate γ* which is obtained by correcting the current yaw rate γ based on the corrected neutral position to the VSA controlling unit 46. The yaw rate correction unit 45 outputs the yaw rate γ* which has been corrected based on the corrected neutral position, the neutral position learning time temperature T_{Y}* and the current yaw rate sensor temperature T_{Y} to the EPS_ECU 20 via the CAN communication.

The VSA controlling unit 46 performs the VSA control of the vehicle 1 by controlling the braking devices B of each wheel 2 via the hydraulic circuit 31 based on the vehicle speed Vs, the yaw rate γ* on which the neutral position correction is performed, the steering angle δ, and the lateral acceleration α ₓ. The VSA controlling unit 46 also performs a braking control via the hydraulic circuit 31 and the ABS control to prevent the wheels 2 from being locked by monitoring the wheel speed V_{W} of the wheel 2 when the driver steps on the brake pedal PB (see Fig. 8).

### (Steering Assistance Force Control and Steering Reaction Force Control by EPS_ECU)

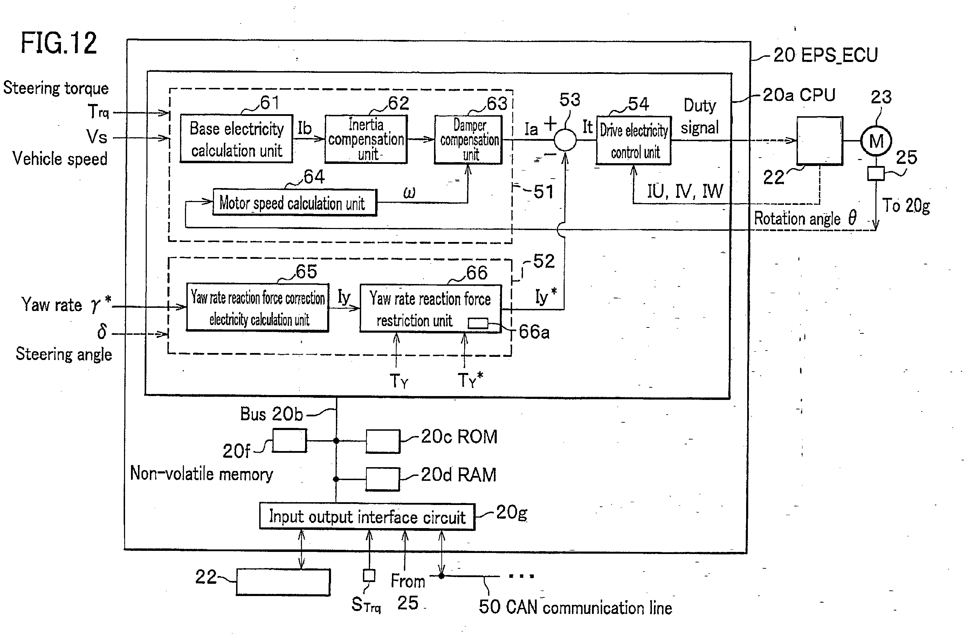

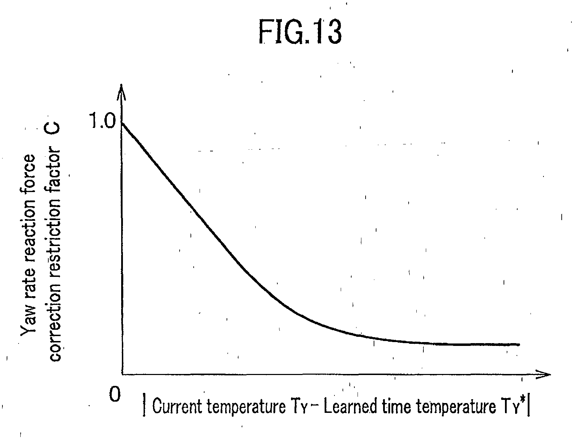

Next, the steering assistance force control and the steering reaction force control performed by the EPS_ECU 20 are described in detail with reference to Figs. 12 and 13. Fig. 12 is a functional block diagram of the EPS_ECU according to the fourth example. Fig. 13 is a graph for explaining a yaw rate reaction force correction restriction factor in the fourth example.

The EPS_ECU 20 includes a basic control unit 51, a steering reaction force control unit 52, a subtracter 53 and a drive electricity control unit 54. A target electricity It corresponding to a steering assistance force to be generated by the motor 23 is calculated in the subtracter 53.

The basic control unit 51 calculates a base electricity Ib which is the base of the target electricity It corresponding to the steering assistance force generated in the motor 23 based on the manual steering force input from the steering wheel 21 (see Fig. 8). The basic control unit 51 also performs required correction on the base electricity Ib to obtain an assist electricity Ia. The basic control unit 51 includes a base electricity calculation unit 61, an inertia compensation unit 62 for compensating the inertia of the steering system and a damper compensation unit 63 for compensating the damping of the steering system.

Here, the steering system of the description "inertia of the steering system" and "damping of the steering system" means to include the motor 23 in the steering system in addition to the steering mechanism such as the pinion shaft 11 and the rack shaft.

The base electricity calculation unit 61 calculates a base electricity Ib based on the steering torque T_{rq} detected by the torque sensor S_{Trq} and the vehicle speed Vs which is obtained from the VSA_ECU 30 via the CAN communication. The inertia compensation unit 62 calculates an inertia correction value based on the time differential value of a steering torque T_{rq} detected by the torque sensor S_{Trq} and the vehicle speed Vs and corrects the base electricity Ib. The damper compensation unit 63 calculates a damping correction value to correct the base electricity Ib based on a motor angular speed ω which is obtained by the motor speed calculation unit 64 by time-differentiating the rotation angle θ detected by the rotation angle sensor 25 and the vehicle speed Vs.

The steering reaction force control unit 52 includes a yaw rate reaction force correction electricity calculation unit 65 and a yaw rate reaction force restriction unit 66. The yaw rate reaction force correction electricity calculation unit 65 basically calculates a yaw rate reaction force correction electricity Iy corresponding to the reaction force component of the steering assistance force to be generated in the motor 23 based on the yaw rate γ* which has been corrected based on the corrected neutral position obtained from the VSA_ECU 30 via the CAN communication.

The process performed by the yaw rate reaction force correction electricity calculation unit 65 to calculate the yaw rate reaction force correction electricity Iy which corresponds to the reaction force component of the steering assistance force to be generated in the motor 23 based on the yaw rate γ* which has been corrected on the corrected neutral position corresponds to "corrects a control based on a value detected by the vehicle behavior sensor" described in Claims.

The yaw rate reaction force restriction unit 66 includes function data or a map which is set in accordance with the difference between the yaw rate sensor temperature T_{Y}* detected at the time of neutral position learning and the current yaw rate sensor temperature T_{Y}. It is to be noted that the function data or the map are stored in a part of the storage area of the ROM 20c.

As shown in Fig. 13, the horizontal axis in the function data or the map data 66a indicates the difference between the yaw rate sensor temperature T_{Y}* detected at the time of neutral position learning and the current yaw rate sensor temperature T_{Y} (indicated as | current temperature T_{Y} - learning time temperature T_{Y}* | in Fig. 13). The vertical axis in the function data or the map data 66a indicates a yaw rate reaction force correction restriction factor C which is to be multiplied with the yaw rate reaction force correction electricity Iy.

The yaw rate reaction force correction restriction factor C is 1.0 when the | the current temperature T_{Y} - learning time temperature T_{Y}* | is 0. The yaw rate reaction force correction restriction factor C is decreased as current temperature T_{Y} - learning time temperature T_{Y}* | is increased and is saturated when the current temperature T_{Y} - learning time temperature T_{Y}* | exceeds a predetermined value.

The yaw rate reaction force restriction unit 66 calculates the difference between the neutral position learning time yaw rate sensor temperature T_{Y}* and the current yaw rate sensor temperature T_{Y} which are obtained from the VSA_ECU 30 via the CAN communication line 50, and determines the yaw rate reaction force correction restriction factor C based on the function data or map data 66a with reference to the difference. Furthermore, the yaw rate reaction force restriction unit 66 multiplies the yaw rate reaction force correction electricity Iy with the determined yaw rate reaction force correction restriction factor C and outputs the corrected yaw rate reaction force correction electricity Iy* to the subtracter 53.

Here, a process performed by the yaw rate reaction force restriction unit 66 to calculate the difference between the neutral position learning time yaw rate sensor temperature T_{Y}* and the current yaw rate sensor temperature T_{Y} and to multiply the yaw rate reaction force correction electricity Iy with the yaw rate reaction force correction restriction factor C determined based on the function data or map data 66a with reference to the difference corresponds to a process "adjusts a correction amount of a control performed according to a detected value of the vehicle behavior sensor based on a difference between the reference point correction time temperature and a current vehicle behavior sensor temperature" recited in Claims.

The basic control unit 51 sets an assist electricity Ia to increase as a manual steering torque is increased. The steering reaction force control unit 52 sets a yaw rate reaction force correction electricity Iy in such a manner that the absolute value of the yaw rate reaction force correction electricity Iy is increased as the absolute value of an actual yaw rate (corrected yaw rate) γ* is increased. As a result, even if the driver applies a large manual steering force to the steering wheel 21 in a case where an actual yaw rate γ* is large, the steering assistance force of the motor 23 is reduced and a steering reaction force applied to the driver becomes larger. In short, the steering wheel 21 is felt to be heavy, which allows the driver to recognize the instability of the vehicle 1 and to suppress the rotation operation of the steering wheel 21 by the driver. Thus, it is possible to enhance the running stability of the vehicle 1 as well as to enhance the operability of the vehicle 1 for the driver.

In the subtracter 53, the yaw rate reaction force correction electricity Iy* is subtracted from the assist electricity Ia which is input from the basic control unit 51 and the target electricity It is input to the drive electricity control unit 54.

The drive electricity control unit 54 controls electricity supplied to the motor 23 from the motor driving circuit 22 in such a manner that a deviation between an actual electricity (indicated as "IU, IV, IW" in Fig. 12) in U-phase, V-phase and W-phase which are supplied to the motor 23 from the motor driving circuit 22 and the target electricity It becomes small. More specifically, the drive electricity control unit 54 controls a duty signal which is to be input to a switching element included in the motor driving circuit 22 in such a manner that the deviation becomes small.

In accordance with the fourth example, the yaw rate reaction force restriction unit 66 in the EPS_ECU 20 (see Fig. 12) controls a yaw rate reaction force correction electricity Iy which is calculated in the yaw rate reaction force correction electricity calculation unit 65 based on the actual yaw rate γ* which has been corrected on the basis of the neutral position value γ₀ learned at the yaw rate sensor temperature T_{Y}* to be smaller as the difference between the neutral position learning time yaw rate sensor temperature T_{Y}* and the current yaw rate sensor temperature T_{Y} becomes larger.

Thus, even if a value detected by the yaw rate sensor S_{Y} is fluctuated depending on the temperature variation of the yaw rate sensor S_{Y} (i.e. if the neutral position of the yaw rate sensor S_{Y} is not correct), the yaw rate reaction force restriction unit 66 can prevent correction control from being performed on the operation reaction force against the operation rotation of the steering wheel 21 (yaw rate reaction force control) by using the yaw rate γ* which has been corrected based on a false yaw rate neutral position. Thus, it is possible to prevent the reaction force control from being performed differently for a right yaw rate and left yaw rate which are the same value, whereby the driver would not feel uncomfortable.

The neutral position of the yaw rate sensor S_{Y} is learned in the VSA_ECU 30 (see Fig. 11) in the fourth example, however, the example of the present invention is not limited. For example, an embodiment of the present invention may be configured that the VSA_ECU 30 transmits the yaw rate γ , which is a detected value, to the EPS_ECU20 via the CAN communication line 50 and the EPS_ECU 20 learns the neutral position in the method as described above and transmits the yaw rate γ* which has been corrected based on the corrected neutral position to other ECU, such as the VSA_ECU 30 via the CAN communication line 50 to use the yaw rate γ* corrected based on the corrected neutral position in a VSA control. An example of the present invention may also be configured that the yaw rate γ which is a value detected by the yaw rate sensor S_{Y} is directly input to the EPS_ECU 20 and the EPS_ECU 20 learns the neutral position in the method as described above and transmits the yaw rate γ* corrected based on the corrected neutral position to other ECU, such as the VSA_ECU 30 via the CAN communication line 50 to use the yaw rate γ* corrected based on the corrected neutral position in the VSA control.

"The temperature of the vehicle behavior sensor" corresponds to "the yaw rate sensor temperature T_{Y}" in the fourth example, however, "the temperature of the vehicle behavior sensor" may be the temperature of the yaw rate sensor S_{Y} or the environmental temperature of the yaw rate sensor S_{Y}.

Further, the steering reaction force control unit 52 of the CPU 20a of the EPS_ECU 20 controls the reaction force component of the steering assistance force based on the yaw rate γ*, however, as disclosed in Japanese Unexamined Patent Application Publication No. 2006 - 256425, the steering reaction force control unit 52 may control the reaction force component of the steering assistance force based on the yaw rate γ* and the steering angle δ.

The vehicle 1 to which methods for correcting a sensor reference point according to the first to fifth embodiments are applied is not limited to a vehicle including an engine such as gasoline engine or diesel engine as a driving source, but may be a EV vehicle (electric vehicle) which includes a motor as a driving source.

There is provided a sensor reference point correction method which corrects the yaw rate neutral position of a yaw rate sensor when a predetermined time ΔTst has passed with a vehicle being parked since the running vehicle was stopped. In the method, during start of the vehicle, a provisional neutral position correction of the yaw rate sensor is performed when a predetermined time ΔTst' which is shorter than a predetermined time ΔTst has passed with the vehicle being parked.

### DESCRIPTION OF REFERNECE NUMERALS

- 1: Vehicle
- 2_{FL}, 2_{FR}: Steered wheels (wheel, front wheel)
- 2_{RL}, 2_{RR}: Steered wheels (Rear wheel)
- 3: Engine room
- 4: Lack and pinion mechanism
- 4a: Lack shaft
- 5: Electric power steering device
- 7: Vehicle behavior detection system
- 11: Pinion shaft
- 12: Steering shaft
- 10: Neutral position correction device
- 12: Neutral position correction calculation unit
- 14: Neutral position correction determination unit
- 16: Storing unit
- 20: EPS_ECU (Control device, Vehicle behavior detection system)
- 21: Steering wheel
- 22: Motor driving circuit
- 23: Motor
- 30: VSA_ECU
- 30f: Non volatile memory (Reference point storing unit, reference point correction time temperature storing unit)
- 42: Neutral position learning condition establishment determination unit (Reference point correction condition establishment determination unit)
- 42a: Neutral position learning condition data
- 44: Neutral position determination unit
- 44a: Neutral position data unit
- 45: Yaw rate correction unit (Correction unit)
- 46: VSA control unit (Vehicle behavior control device)
- 50: CAN communication line
- 51: Basis control unit
- 52: Steering reaction force control unit
- 65: Yaw rate reaction force correction electricity calculation unit
- 66: Yaw rate reaction force control unit
- 66a: Function data or map data
- S_{HA}: Steering angle sensor (Sensor, Vehicle behavior sensor, Vehicle behavior detection system)
- S_{TAir}: Intake air temperature sensor (Outer air temperature detection unit)
- S_{Trq}: Torque sensor (Steering force detection unit)
- S_{TY}: Temperature sensor (Sensor temperature detection unit, Vehicle behavior sensor temperature detection unit)
- S_{V}: Vehicle speed sensor (Vehicle behavior sensor, Vehicle behavior detection system)
- S_{Y}: Yaw rate sensor (Sensor, Vehicle behavior sensor, Vehicle behavior detection system)
- ΔTst: Predetermined time (First predetermined time, Second predetermined time)
- V: Vehicle
- T_{Y}: Yaw rate sensor temperature T_{AIR} Outer air temperature T_{rq} Steering torque (Vehicle behavior information)
- γ: Yaw rate (Vehicle behavior information)
- Vs: Vehicle speed (Vehicle behavior information)
- δ: Steering angle (Vehicle behavior information)

## Claims

1. A yaw rate sensor reference point correction method, comprising a step of correcting a neutral point of a sensor (SY), which is provided to an engine room of a vehicle (1) equipped with a electric power steering control unit, **characterised in that** :
the yaw rate neutral position is corrected before the temperature of the engine room is increased by the heat of the engine, such that
if the vehicle which was stopped at the stop time (10) has been parked for a first predetermined time (ΔTst) until a first point in time (t1) after the stop time (t0), the electric power steering control unit (EPS_ECU 20) determines as the yaw rate neutral position a value detected by the yaw rate sensor (SY) at the second point in time (t2), after the stop time (t0) when a second predetermined time (ΔTyaw) which is shorter than the first predetermined time (ΔTst) is passed since the vehicle (1) was stopped, and corrects the yaw rate neutral position at the first point in time (t1); and
if the temperature of the engine room is increased, the yaw rate neutral position is not corrected.

## Patentansprüche

1. Gierratensensor-Referenzpunkt-Korrekturverfahren, welches einen Schritt zum Korrigieren eines Neutralpunkts eines Sensors (SY) aufweist, der an einem Motorraum eines Fahrzeugs (1) vorgesehen ist, das mit einer elektrischen Servolenksteuereinheit ausgestattet ist, **dadurch gekennzeichnet, dass**:
die Gierratenneutralposition korrigiert wird, bevor die Temperatur des Motorraums durch die Wärme des Motors angestiegen ist, so dass,
wenn das Fahrzeug, das zur Stoppzeit (t0) gestoppt wurde, für eine erste vorbestimmte Zeit (ΔTst) bis zu einem ersten Zeitpunkt (t1) nach der Stoppzeit (t0) geparkt worden ist, die elektrische Servolenksteuereinheit (EPS_ECU 20), als die Gierratenneutralposition, einen Wert bestimmt, der von dem Gierratensensor (SY) zum zweiten Zeitpunkt (t2) nach der Stoppzeit (t0) erfasst wurde, wenn eine zweite vorbestimmte Zeit (ΔTyaw), die kürzer als die erste vorbestimmte Zeit (ΔTst) ist, abgelaufen ist, seit das Fahrzeug (1) gestoppt wurde, und die Gierratenneutralposition zum ersten Zeitpunkt (t1) korrigiert; und
wenn die Temperatur des Motorraums angestiegen ist, die Gierratenneutralposition nicht korrigiert wird.

## Revendications

1. Un procédé de correction du point de référence d'un capteur de vitesse de lacet comprenant une étape de correction d'un point neutre d'un capteur (SY) qui est amené à un bloc moteur d'un véhicule (1) équipé d'une commande électrique de direction assistée, **caractérisé en ce :**
**que** la position neutre de la vitesse de lacet est corrigée avant que la température du bloc moteur ne soit augmentée par la chaleur du moteur, de telle sorte que
si le véhicule qui a été arrêté au moment d'arrêt (t0) est stationné pendant un premier temps préalablement déterminé (ΔTst) jusqu'à un premier point dans le temps (t1) après le temps d'arrêt (t0), l'unité de commande électrique de direction assistée (EPS_ECU 20) détermine comme position neutre de la vitesse de lacet une valeur détectée par le capteur de vitesse de lacet (SY) au deuxième moment (t2) après le moment d'arrêt (t0) lorsqu'un deuxième temps préalablement déterminé (ΔTyaw) qui est inférieur au premier temps préalablement déterminé (ΔTst) s'est écoulé depuis que le véhicule (1) a été arrêté et corrige la position neutre de vitesse de lacet comme le premier point dans le temps (t1) et
si la température du bloc moteur augmente, la position neutre de la vitesse de lacet n'est pas corrigée.
